(19) Europäisches Patentamt
European Patent Office
Office européen des brevets

(11) **EP 3 971 814 A1**

(12) **EUROPEAN PATENT APPLICATION**

(43) Date of publication:
**23.03.2022 Bulletin 2022/12**

(21) Application number: **21197000.9**

(22) Date of filing: **15.09.2021**

(51) International Patent Classification (IPC):
***G06Q 40/06*** *(2012.01)*

(52) Cooperative Patent Classification (CPC):
**G06Q 40/06**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.09.2020 US 202063079205 P**

(71) Applicant: **Accenture Global Solutions Limited Dublin 4 (IE)**

(72) Inventors:
- **RAMESH, Shreyas**
  **Mountainside, 07092 (US)**
- **HSU, Kung-Chuan**
  **Cerritos, 90703 (US)**
- **HARWOOD, Julianna**
  **Boston, 02127 (US)**
- **HEUPEL, Charles**
  **Arlington, 22203 (US)**

(74) Representative: **Swindell & Pearson Limited**
**48 Friar Gate**
**Derby DE1 1GY (GB)**

(54) **QUANTUM MIXED INTEGER QUADRATIC PROGRAMMING AND GRAPHICAL USER INTERFACE FOR PORTFOLIO OPTIMIZATION**

(57)     Methods, systems, and apparatus for improving the computational time and complexity of portfolio optimization. In one aspect, a method includes receiving data representing a mixed integer programming (MIP) formulation of a portfolio optimization task for a current portfolio; mapping the MIP formulation of the portfolio optimization task to a quadratic unconstrained binary optimization (QUBO) formulation of the portfolio optimization task; and obtaining data representing a solution to the portfolio optimization task from a quantum computing resource, wherein the solution to the portfolio optimization task comprises data indicating how to rebalance the current portfolio.

FIG. 1

EP 3 971 814 A1

**Description**

CROSS-REFERENCE TO RELATED APPLICATION

This application claims the benefit of U.S. Provisional Application No. 63/079,205, filed September 16, 2020, and titled "Quantum Mixed Integer Quadratic Programming and Graphical User Interface for Portfolio Optimization," which is incorporated by reference.

TECHNICAL FIELD

The present invention relates to quantum computing.

BACKGROUND

Portfolio optimization is the process of selecting a best portfolio (distribution of assets) out of a set of all portfolios being considered, according to some objective. For example, the objective can maximize some factors such as expected return, and minimize other factors such as financial risk. Factors being considered may range from tangible (such as assets, liabilities, earnings or other fundamentals) to intangible (such as selective divestment). Standard portfolio optimization problems are typically casted as quadratic programs (QP), with the goal of maximizing expected return (alpha) while minimizing portfolio volatility. These optimizations nearly always have additional constraints for managing sector, asset and other exposures, while also attempting to minimize liquidity risk and transaction costs.

One of the challenges in applying mathematical optimization in practice is that the number of recommended portfolio holdings is oftentimes very large, with many positions having very small portfolio weights. This problem is particularly severe for portfolios with a very large investable universe, for example, international equities, where the number of stocks under consideration can be ten thousand or more. Practitioners often use heuristics to remove small positions from the portfolio. However, these ad hoc rebalancing are potentially detrimental, altering the risk and reward of the portfolio in unknown ways.

SUMMARY

This specification describes methods and systems that use quantum computing resources to perform portfolio optimization with reduced computational time and complexity.

In general, one innovative aspect of the subject matter described in this specification can be implemented in a method that includes receiving data representing a mixed integer programming (MIP) formulation of a portfolio optimization task for a current portfolio; mapping the MIP formulation of the portfolio optimization task to a quadratic unconstrained binary optimization (QUBO) formulation of the portfolio optimization task; and obtaining data representing a solution to the portfolio optimization task from a quantum computing resource, wherein the solution to the portfolio optimization task comprises data indicating how to rebalance the current portfolio.

Other implementations of this aspect include corresponding classical, quantum or classical-quantum computer systems, apparatus, and computer programs recorded on one or more computer storage devices, each configured to perform the actions of the methods. A system of one or more classical and quantum computers can be configured to perform particular operations or actions by virtue of having software, firmware, hardware, or a combination thereof installed on the system that in operation causes or cause the system to perform the actions. One or more computer programs can be configured to perform particular operations or actions by virtue of including instructions that, when executed by data processing apparatus, cause the apparatus to perform the actions.

The foregoing and other implementations can each optionally include one or more of the following features, alone or in combination. In some implementations the current portfolio comprises a portfolio output by a quadratic programming optimization process.

In some implementations the MIP formulation of the portfolio optimization task comprises: an objective function to be minimized, wherein the objective function comprises continuous-valued variables and is based on i) a tracking error between the current portfolio and a rebalanced portfolio, ii) a penalty for number of invested stocks, iii) a penalty for transaction costs, and iv) a penalty for portfolio turnover; and one or more constraints, comprising equality and inequality constraints.

In some implementations mapping the MIP formulation of the portfolio optimization task to a QUBO formulation of the portfolio optimization task comprises: mapping the objective function to be minimized to a QUBO objective function to be minimized; and adding one or more penalty terms to the QUBO objective function to be minimized, wherein the penalty term is determined based on the one or more constraints.

In some implementations mapping the MIP formulation of the portfolio optimization task to a QUBO formulation of the portfolio optimization task comprises transforming the continuous-valued variables to discrete-valued variables; and converting the discrete-valued variables to binary-valued variables, wherein the binary-valued variables are included in the QUBO objective function.

In some implementations transforming the continuous-valued variables to discrete-valued variables and converting the discrete-valued variables to binary-valued variables comprises, for each continuous-valued variable: determining a preselected number of binary variables with respective values that form a binary representation of the continuous valued variable; and setting the continuous-valued variable as equal to i) an inverse of 2 to the power of the preselected number minus one, multiplied by i) a sum, over an index numbering the binary variables, of the value of a respective binary variable multiplied by 2 to the power of an index label of the respective binary variable.

In some implementations mapping the MIP formulation of the portfolio optimization task to a QUBO formulation of the portfolio optimization task comprises: mapping each inequality constraint to a respective equality constraint; and adding each equality constraint as a penalty term to the QUBO objective function.

In some implementations i) the inequality constraints comprise a first inequality constraint that limits investment on stock positions in the rebalanced portfolio, and ii) mapping the first inequality constraint to a respective equality constraint comprises using rational numbers to approximate one or more real-valued parameters included in the first inequality constraint.

In some implementations mapping one or more of the inequality constraints to respective equality constraints comprises using a first set of slack variables to determine respective binary representations of one or more integer-valued parameters included in the inequality constraint; and using a second set of slack variables to enforce an upper bound of the inequality constraint.

In some implementations adding each equality constraint as penalty terms to the objective function comprises, for each equality constraint, squaring the equality constraint and multiplying the squared equality constraint by a respective penalty constant.

In some implementations i) the quantum computing resource comprises a quantum annealing computer, optionally wherein the solution to the portfolio optimization task is computed using quantum adiabatic computation, or ii) the quantum computing resource comprises a gate-based universal quantum computer, optionally wherein the solution to the portfolio optimization task is computed using a Quantum Approximate Optimization Approach or other quantum-classical hybrid variational algorithm.

In some implementations the method further comprises initiating an action based on the obtained data representing a solution to the portfolio optimization task.

In some implementations initiating an action based on the obtained data representing a solution to the portfolio optimization task comprises adjusting portfolio holdings using the obtained data representing the solution to the portfolio optimization task.

In general, another innovative aspect of the subject matter described in this specification can be implemented in a method that includes displaying a first user interface presentation, wherein the first user interface presentation comprises a display of i) a summary of a current portfolio and ii) a user-selectable optimize portfolio option; receiving, through the first user interface presentation, user selection of the optimize portfolio option; transmitting data representing a portfolio optimization task associated with optimizing the current portfolio to a quantum computing resource; receiving, from the quantum computing resource, data representing a solution to the portfolio optimization task, wherein the solution to the portfolio optimization task comprises an optimized portfolio; and displaying a second user interface presentation, wherein the second user interface presentation comprises a display of a summary of the optimized portfolio.

Other implementations of this aspect include corresponding classical, quantum or classical-quantum computer systems, apparatus, and computer programs recorded on one or more computer storage devices, each configured to perform the actions of the methods. A system of one or more classical and quantum computers can be configured to perform particular operations or actions by virtue of having software, firmware, hardware, or a combination thereof installed on the system that in operation causes or cause the system to perform the actions. One or more computer programs can be configured to perform particular operations or actions by virtue of including instructions that, when executed by data processing apparatus, cause the apparatus to perform the actions.

The foregoing and other implementations can each optionally include one or more of the following features, alone or in combination. In some implementations the displayed summary of the current portfolio comprises a total cash balance and a list of assets included in the current portfolio, wherein the list of assets includes, for each asset, i) an associated ticker, ii) asset name, iii) asset sector, iv) number of shares, v) price per share, vi) total dollar amount per associated ticker, and vii) asset weight.

In some implementations the method further comprises, in response to receiving the user selection of the optimize portfolio option, displaying a first pop up window, wherein the first pop up window comprises a display of: a first input field for naming the portfolio, a second input field for user selection of either i) a custom optimization strategy or ii) a cluster by sector optimization strategy, and a user-selectable run optimization option for initiating portfolio optimization.

In some implementations in response to receiving, through the second input field in the first pop up window, user selection of the custom optimization strategy, the first pop up window comprises a display of: a third input field for inputting a target discretization level of portfolio optimization, a fourth input field for inputting a size of an investable universe from available stocks, and a fifth input field for inputting types of stocks to be included in the investable universe.

In some implementations in response to receiving, through the second input field in the first pop up window, user selection of the cluster by sector optimization strategy, the first pop up window comprises a display of: a third input field for inputting a target discretization level of the portfolio optimization, a warning graphic that indicates selection of the cluster by sector optimization strategy requires additional processing time, a graphical representation of a current asset sector weighting, and a user selectable view details option for obtaining sector weight details.

In some implementations selection of the view details option causes display of a second pop up window, wherein the second pop up window displays details of how the weights are spread across the asset sectors.

In some implementations the method further comprises, in response to receiving, through the first user interface presentation, user selection of the optimize portfolio option, displaying a third user interface presentation, wherein the third user interface presentation comprises a display of: an archive of existing portfolio optimizations that belong to the user, wherein each existing portfolio optimization is associated with a respective user-selectable retrieve option that, when selected, causes a summary of the existing portfolio optimization to be displayed in the third user interface presentation; and a graphical indication that the current portfolio optimization is being processed, wherein when the current portfolio optimization has been processed, the current portfolio optimization is added to the archive.

In some implementations the method further comprises, in response to receiving, through the third user interface presentation, user selection of a retrieve option, displaying a fourth user interface presentation, wherein the fourth user interface presentation comprises a display of: a summary of a respective portfolio optimization corresponding to the retrieve option, wherein the summary comprises a list of assets included in the respective portfolio optimization, the list of assets comprising an optimized asset weight determining by the quantum computing resource, a graphical representation of an asset sector weighting in the respective portfolio optimization, metrics associated with the respective portfolio optimization, comprising expected return and expected risk, a user selectable apply option, and a user selectable view benchmarking option.

In some implementations the method further comprises, in response to receiving, through the fourth user interface presentation, user selection of the view benchmarking option, displaying a fifth user interface presentation, wherein the fifth user interface presentation comprises a display of: a graphical representation of a cumulative return of a classical computing resource solution versus the quantum computing resource solution, a graphical representation of sector weightings calculated using a classical computing resource and sector weightings calculated using the quantum computing resource, and a graphical representation of weight differences calculated using a classical computing resource and weight differences calculated using the quantum computing resource.

In some implementations the method further comprises in response to receiving, through the fourth user interface presentation, user selection of the apply option: setting the optimal asset sector weighting in the respective portfolio optimization as a base weighting; and displaying a user selectable undo option for undoing the setting of the base weighting.

In some implementations the summary of the portfolio optimization an optimized asset weight, wherein the optimized asset weight is determined by the quantum computing resource.

In some implementations the second user interface presentation further comprises a graphical representation of a recommended asset sector weighting for the portfolio optimization, the recommended asset weights determined by the quantum computing resource, and portfolio optimization metrics.

In some implementations the method further comprises generating the data representing the portfolio optimization task associated with optimizing the current portfolio.

The subject matter described in this specification can be implemented in particular ways so as to realize one or more of the following advantages.

Portfolio optimization has applications in a variety of settings. One example application is portfolio rebalancing and trading processes. Such processes usually occur on a weekly or more frequent basis. In this application, optimizations are used to rebalance a portfolio given updates for expected returns, risk, and other model parameters. Another example application is portfolio back-testing, where new investment signals or other models are tested using historical data to determine their potential value. Back-testing can also be used for risk management purposes and historical or ad hoc scenario analysis. When performing such simulations the number of optimizations needed to complete a back-test can be very large. Therefore, methods that decrease the computational run times associated with solving mixed integer programs are extremely valuable.

Many conventional methods and systems perform portfolio optimization using quadratic programs. Mixed integer programs can produce high quality results, but are much more difficult and costly to solve. A system implementing the techniques described in this specification can overcome this problem by deriving and obtaining a solution to a quantum formulation of a respective mixed integer program. Accordingly, both the time and complexity associated with solving the portfolio rebalancing problem can be reduced.

The details of one or more implementations of the subject matter of this specification are set forth in the accompanying drawings and the description below. Other features, aspects, and advantages of the subject matter will become apparent from the description, the drawings, and the claims.

BRIEF DESCRIPTION OF THE DRAWINGS

FIG. 1 shows an example system for portfolio optimization.
FIG. 2 is a flow diagram of an example process for obtaining data indicating how to balance a current portfolio.
FIG. 3 is a flow diagram of an example process for generating and displaying data representing a candidate portfolio optimization.
FIGS. 4A-4G show example graphical user interface presentations.

Like reference numbers and designations in the various drawings indicate like elements.

DETAILED DESCRIPTION

This specification describes methods and systems for utilizing quantum computing resources to perform portfolio optimization. A portfolio optimization task, i.e., the task of improving the risk reward profile of a portfolio, can be performed by mapping a classical formulation of the task, e.g., a QP formulation that includes continuous valued variables, to a quantum formulation of the task, e.g., a QUBO formulation that includes binary valued variables. The mapping is specifically constructed to preserve information and to avoid singularities. Therefore, accurate solutions to the portfolio optimization task can be obtained with reduced computational time and complexity.

*Example Hardware*

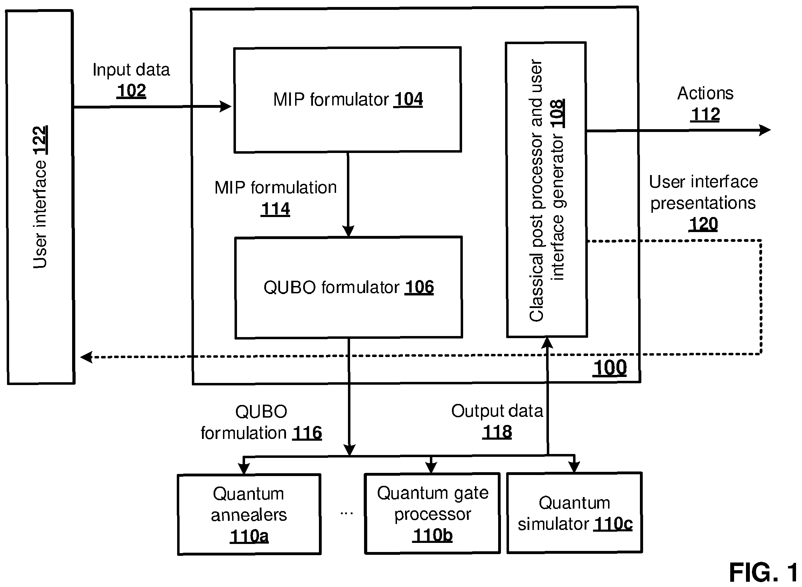

FIG. 1 depicts an example system 100 for portfolio optimization. The system 100 is an example of a system implemented as computer programs on one or more classical and quantum computing devices in one or more locations, in which the systems, components, and techniques described in this specification can be implemented.

The system 100 includes a mixed integer programming (MIP) formulator 104, a QUBO formulator 106, a classical post-processor/user interface generator 108, and one or more quantum computing resources, e.g., quantum annealer 110a, quantum gate processor 110b and quantum simulator 110c. For convenience, three additional quantum computing resources are shown in FIG. 1, with the quantum computing resources being external to the system 100, e.g., provided as an external cloud service However in some implementations the system 100 can include the quantum computing resources. Components of the system 100 can be in data communication with each of the additional quantum computing resources, e.g., through a communication network such as a local area network or wide area network.

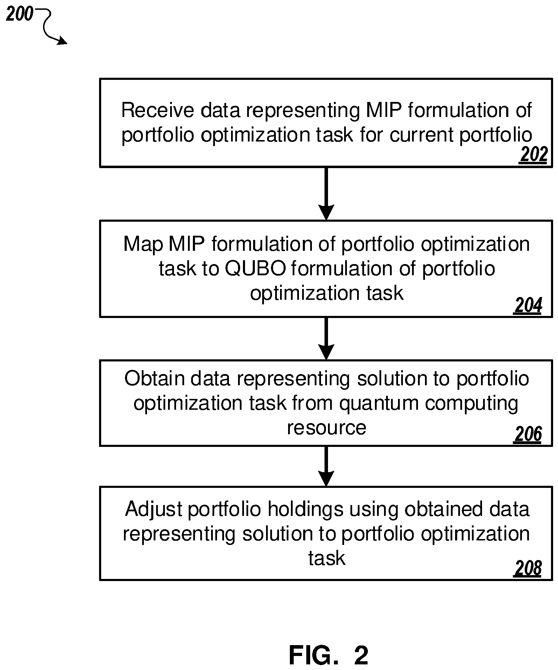

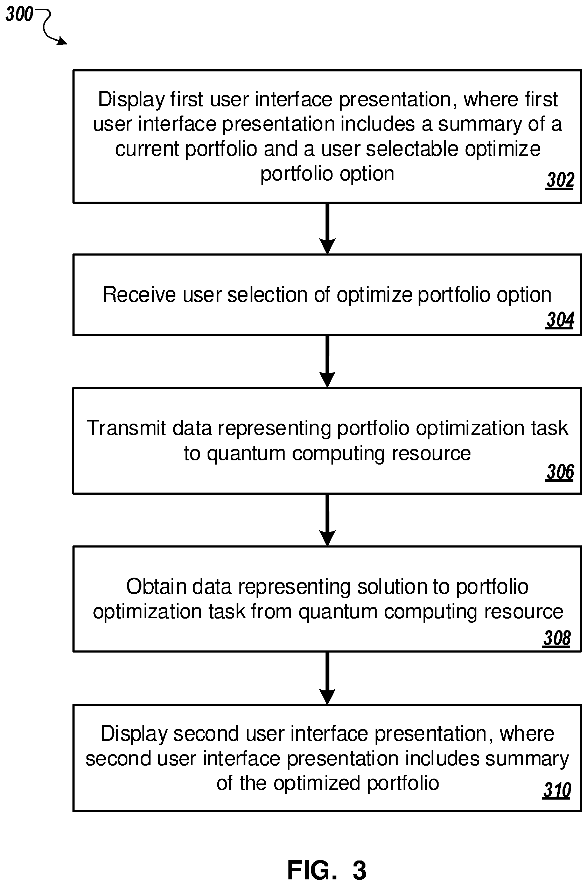

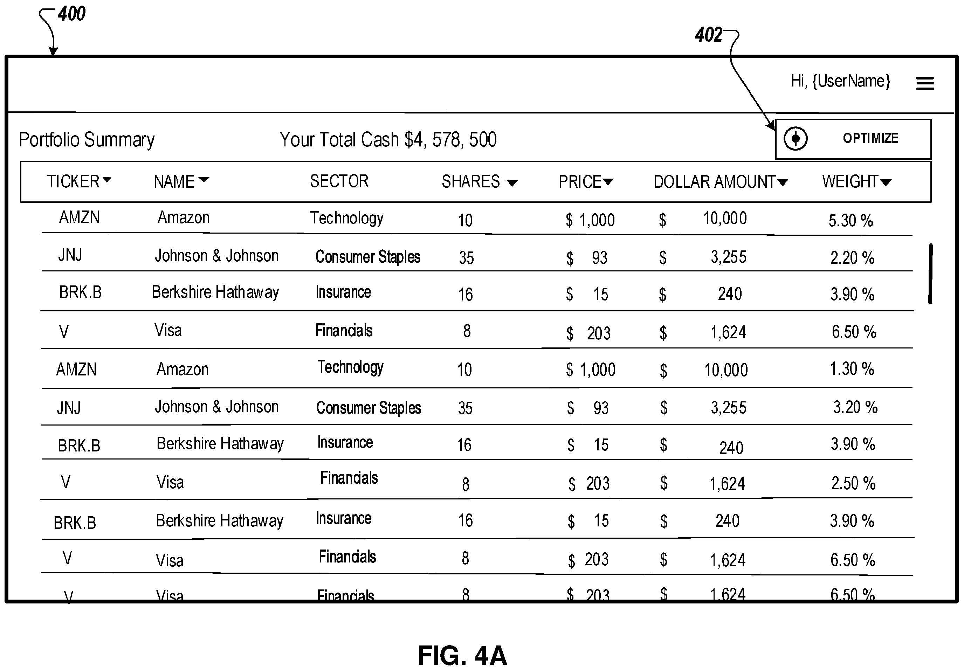

The system 100 is configured to receive as input data representing a portfolio optimization task, e.g., input data 102. As described in more detail below with reference to step 202 of FIG. 2, the input data 102 can include data specifying the portfolio optimization task to be solved. In some implementations the input data 102 can be received through a user interface presentation displayed by the system 100. The system 100 processes the received input data 102 to generate as output data representing actions to be initiated, e.g., actions 112. The actions are based on a determined solution to the portfolio optimization task. The system can also generate user interface presentations as output, e.g., user interface presentations 120, which can also be based on a determined solution to the portfolio optimization task. Example user interface presentations generated and displayed by the system 100 are described below with reference to FIGS. 3, 4A-4G.

The system 100 is configured to determine a solution to the portfolio optimization task represented by the input data 102. To determine a solution to the portfolio optimization task, the system 100 uses one or more of the MIP formulator 104, the QUBO formulator 106 or the classical post processor/user interface generator 108.

In some implementations the input data 102 can include a quadratic program formulation of the portfolio optimization. In these implementations the system 100 can use the MIP formulator 104 to determine an MIP formulation 114 of the portfolio optimization task represented by the input data 102 (as a pre-processing step). Example operations performed by the MIP formulator 104 when processing received input data are described below with reference to FIG. 2.

The MIP formulator 104 is configured to provide the MIP formulation 114 of the portfolio optimization task represented by the input data 102 to the QUBO formulator 106. The QUBO formulator 106 is configured to receive the MIP formulation 114 of the portfolio optimization task represented by the input data 102 and to map the MIP formulation 114 of the portfolio optimization task represented by the input data 102 to a quadratic unconstrained binary optimization (QUBO) formulation 116 of the portfolio optimization task represented by the input data 102. Example operations performed by the QUBO formulator 106 to map a MIP formulation of an portfolio optimization task are described below with reference to FIG. 2.

The system 100 is configured to transmit data representing the QUBO formulation 116 of the portfolio optimization task represented by the input data 102 to one or more quantum computing resources. For example, the QUBO formulator 106 can directly provide the QUBO formulation 116 of the portfolio optimization task to be solved to one or more quantum computing resources.

The quantum computing resources can include quantum annealer computing resources, e.g., quantum annealer 110a. A quantum annealer is a device configured to perform quantum annealing - a procedure for finding the global minimum of a given objective function over a given set of candidate states using quantum tunneling. Quantum tunneling is a quantum mechanical phenomenon where a quantum mechanical system overcomes localized barriers in the energy landscape which cannot be overcome by a classically described system. Some quantum annealer devices perform a subclass of quantum annealing called adiabatic quantum computing, which relies on the adiabatic theorem to perform computations.

Quantum annealer devices can solve problems if they are formulated in an acceptable format. For example, quantum annealer devices can solve some QUBO formulations of problems by mapping the QUBO formulation into a qubit network of a quantum annealer device.

The quantum computing resources can include one or more quantum gate processors, e.g., quantum gate processor 110b. A quantum gate processor includes one or more quantum circuits, i.e., models for quantum computation in which a computation is performed using a sequence of quantum logic gates, operating on a number of qubits (quantum bits).

Quantum gate processors can be used to solve certain optimization problems, e.g., problems that can be formulated as a QUBO problem. For example, some quantum gate processors can solve QUBO problems by simulating a corresponding adiabatic quantum annealing process using a gate model. This can be advantageous, e.g., compared to directly performing the corresponding adiabatic quantum annealing process using a quantum annealer device, since not all quantum annealer devices can realize physical quantum systems that represent an optimization problem. For example, some quantum annealer devices can not provide the physical interactions necessary to solve an optimization problem. In these examples, a Hamiltonian describing the optimization problem can be decomposed into a sequence of single or multi-qubit quantum gates, and a solution to the optimization problem can be obtained through application of the sequence of single or multi-qubit gates on a register of qubits and subsequent measurement of the register of qubits.

The quantum computing resources can include one or more quantum simulators, e.g., quantum simulator 110c.

The one or more quantum computing resources that receive the transmitted data representing the QUBO formulation 116 of the portfolio optimization task represented by the input data 102 are configured to process the received data to generate output data 118 representing a solution to the portfolio optimization task. The one or more quantum computing resources are configured to provide the generated output data 118 to the system 100, e.g., to the classical post processor/user interface generator 108.

The system 100 is configured to receive the output data 118 from the one or more quantum computing resources. The classical post-processor/user interface generator 108 is configured to process the received output data 118. Processing the output data 118 includes computing portfolio holding weights corresponding to the output data. This can include using Equation (16) below (which links the portfolio holding weights to binary valued variables included in the QUBO formulation). Processing the output data 118 can further include providing the output data 118 as input for additional classical computations or for defining parameters for subsequent quantum computations, and determining one or more actions to be taken based on the solution to the portfolio optimization task, e.g., an adjustment of current portfolio holdings based on the solution to the portfolio optimization task.

*Programming the hardware: an example process for obtaining data indicating how to rebalance a current portfolio*

FIG. 2 is a flowchart of an example process 200 for obtaining data indicating how to balance a current portfolio. For convenience, the process 200 will be described as being performed by a system of one or more classical or quantum computing devices located in one or more locations. For example, example system 100 of FIG. 1, appropriately programmed in accordance with this specification, can perform the process 200.

The system receives data representing a mixed integer programming (MIP) formulation of a portfolio optimization task for the current portfolio (step 202).

In some implementations the current portfolio can be a portfolio output by a quadratic programming (QP) optimization process. An example QP formulation of a portfolio optimization task is described below in the Section Classical MIP problem formulation. In these implementations the system can map the QP formulation of the portfolio optimization task to the MIP formulation of the portfolio optimization task.

The MIP formulation of the portfolio optimization task includes an objective function to be minimized, where the objective function comprises continuous-valued variables and is based on i) a tracking error between the current portfolio and a rebalanced portfolio, ii) a penalty for number of invested stocks, iii) a penalty for transaction costs, and iv) a penalty for portfolio turnover. The MIP formulation also includes one or more constraints, including equality and inequality constraints. An example MIP formulation of the portfolio optimization task is described below in the section Classical MIP problem formulation.

The system maps the MIP formulation of the portfolio optimization task to a quadratic unconstrained binary optimization (QUBO) formulation of the portfolio optimization task (step 204). To map the MIP formulation of the portfolio optimization task to a QUBO formulation of the portfolio optimization task, the system maps the objective function to be minimized to a QUBO objective function to be minimized and adds one or more penalty terms to the QUBO objective function to be minimized, where the penalty term is determined based on the one or more constraints. An example QUBO objective function (including one or more penalty terms) is described below in Section Problem mapping.

To perform the mapping, the system transforms the continuous-valued variables to discrete-valued variables and converts the discrete-valued variables to binary-valued variables, where the binary-valued variables are included in the QUBO objective function. Transforming the continuous-valued variables to discrete-valued variables and converting the discrete-valued variables to binary-valued variables includes, for each continuous-valued variable: determining a preselected number of binary variables with respective values that form a binary representation of the continuous valued variable; and setting the continuous-valued variable as equal to i) an inverse of 2 to the power of the preselected number minus one, multiplied by i) a sum, over an index numbering the binary variables, of the value of a respective binary variable multiplied by 2 to the power of an index label of the respective binary variable.

Mapping the MIP formulation of the portfolio optimization task to a QUBO formulation of the portfolio optimization task includes mapping each inequality constraint to a respective equality constraint and adding each equality constraint as a penalty term to the QUBO objective function. In some implementations the system maps one or more of the inequality constraints to respective equality constraints using a first set of slack variables $a_i$ to determine respective binary representations of one or more integer-valued parameters included in the inequality constraint and a second set of slack variables to enforce an upper bound of the inequality constraint. Enforcing an upper bound using the second set of slack variables ensures that the resulting equality constraint correctly represents the inequality constraint.

In some implementations the inequality constraints can include a first inequality constraint that limits investment on stock positions in the rebalanced portfolio. In these implementations the system can map the first inequality constraint to a respective equality constraint using rational numbers to approximate one or more real-valued parameters included in the first inequality constraint. This use of rational numbers provides an integer (and subsequently binary) representation of the first inequality constraint, which is necessary when generating the QUBO formulation and using the quantum computing resources.

Techniques for mapping each inequality constraint to a respective equality constraint are described in detail below with reference to Section Problem Mapping. Adding each equality constraint as penalty terms to the objective function includes, for each equality constraint, squaring the equality constraint and multiplying the squared equality constraint by a respective penalty constant. Techniques for adding each equality constraint as a penalty term to the QUBO objective function is described in detail below with reference to Section Problem Mapping.

The system obtains data representing a solution to the portfolio optimization task from a quantum computing resource, where the solution to the portfolio optimization task comprises data indicating how to rebalance the current portfolio (step 206).

In some implementations the quantum computing resource can be a quantum annealing computer. In these implementations the solution to the portfolio optimization task can be computed using quantum adiabatic computation. In some implementations the quantum computing resource can be a gate-based universal quantum computer. In these implementations the solution to the portfolio optimization task can be computed using a Quantum Approximate Optimization Approach or other quantum-classical hybrid variational algorithm.

In some implementations the system can initiate an action based on the obtained data representing a solution to the portfolio optimization task. For example, the system can adjust current portfolio holdings using the obtained data representing the solution to the portfolio optimization task. To adjust the current portfolio holdings using the obtained data the system computes weights for the current portfolio holding using the data obtained from the quantum computing resource, e.g. by using Equation (16).

*Programming the hardware: an example process for generating and displaying data representing a candidate portfolio optimization*

FIG. 3 is a flowchart of an example process 300 for generating and displaying data representing a candidate portfolio optimization. For convenience, the process 200 will be described as being performed by a system of one or more classical or quantum computing devices located in one or more locations. For example, example system 100 of FIG. 1, appropriately programmed in accordance with this specification, can perform the process 200.

The system displays a first user interface presentation (step 302). The first user interface presentation includes a display of a summary of a current portfolio. The displayed summary of the current portfolio includes a total cash balance and a list of assets included in the current portfolio, where the list of assets includes, for each asset, i) an associated ticker, ii) asset name, iii) asset sector, iv) number of shares, v) price per share, vi) total dollar amount per associated ticker, and vii) asset weight. The first user interface presentation further includes a user-selectable optimize portfolio option. An example first user interface presentation is shown in FIG. 4A.

The system receives, through the first user interface presentation, user selection of the optimize portfolio option (step 304). In response to receiving user selection of the optimize portfolio option, the system can display a first pop up window. The first pop up window includes a display of: a first input field for naming the portfolio, a second input field for user selection of either i) a custom optimization strategy or ii) a cluster by sector optimization strategy, and a user-selectable run optimization option for initiating portfolio optimization.

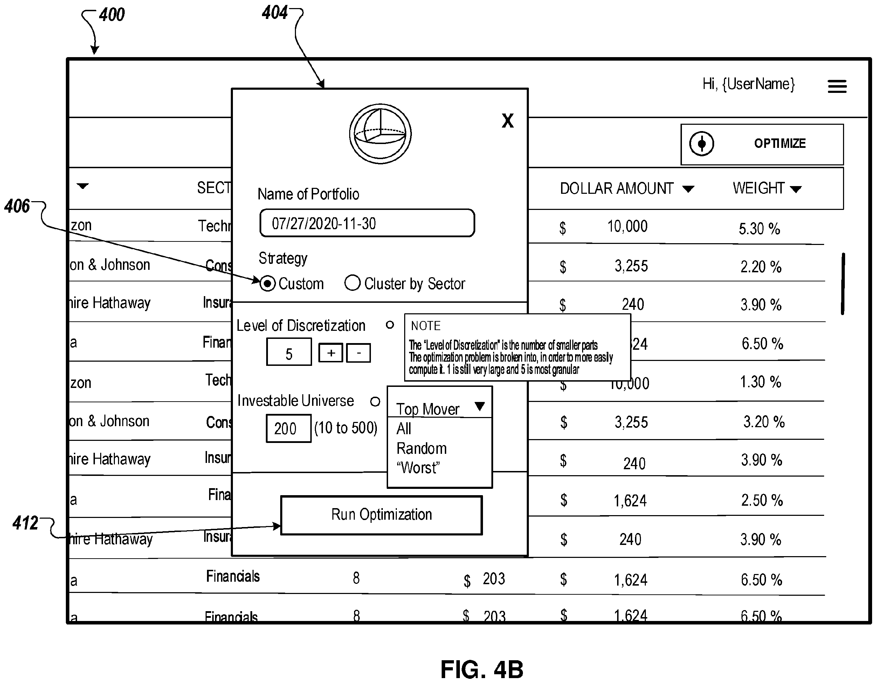

In response to receiving, through the second input field in the first pop up window, user selection of the custom optimization strategy, the system causes the first pop up window to further display a third input field for inputting a target discretization level of portfolio optimization, a fourth input field for inputting a size of an investable universe from available stocks, and a fifth input field for inputting types of stocks to be included in the investable universe. An example first pop up window with user selection of the custom optimization strategy is shown in FIG. 4B.

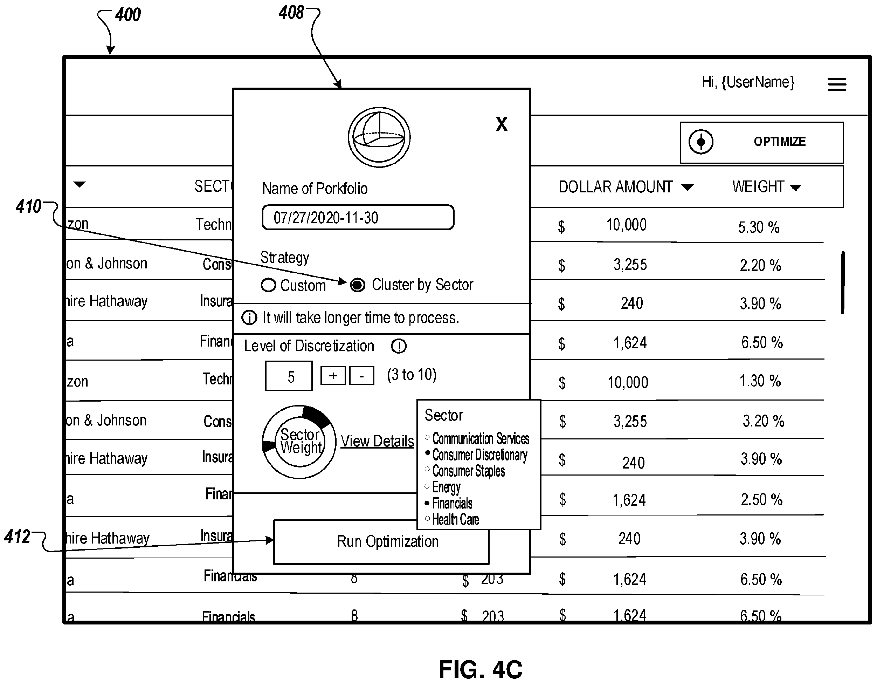

In response to receiving, through the second input field in the first pop up window, user selection of the cluster by sector optimization strategy, the system causes the first pop up window to further display a third input field for inputting a target discretization level of the portfolio optimization, a warning graphic that indicates selection of the cluster by sector optimization strategy requires additional processing time, a graphical representation of a current asset sector weighting, and a user selectable view details option for obtaining sector weight details. User selection of the view details option causes display of a second pop up window, wherein the second pop up window displays details of how the weights are spread across the asset sectors. An example first pop up window with user selection of the cluster by sector optimization strategy is shown in FIG. 4C.

In response to receiving user selection of the run optimization option through the first pop up window, the system transmits data representing a portfolio optimization task associated with optimizing the current portfolio to a quantum computing resource (step 306). In some implementations the system can generate the data representing the portfolio optimization task associated with optimizing the current portfolio, e.g., as a QUBO formulation, using the techniques described in FIG. 2 above.

The system receives, from the quantum computing resource, data representing a solution to the portfolio optimization task, where the solution to the portfolio optimization task includes data indicating how to optimize the current portfolio (step 308).

The system displays a second user interface presentation (step 310). The second user interface presentation is based on the obtained data indicating how to optimize the current portfolio and includes a display of a summary of the portfolio optimization. The displayed summary of the portfolio optimization is similar to the summary displayed in the first user interface presentation, except the summary includes, for each asset in the portfolio optimization, an optimized asset weight as determined by the quantum computing resource. The second user interface presentation can further include a graphical representation of a recommended asset sector weighting for the portfolio optimization, the recommended asset weights determined by the quantum computing resource, and portfolio optimization metrics.

In some implementations, whilst the quantum computing resource is processing the portfolio optimization task, the system can display a third user interface presentation that displays a graphical indication that the current portfolio optimization is being processed. The third user interface presentation can further display an archive of existing portfolio optimizations previously requested by the user. When the quantum computing resource has processed the portfolio optimization task and the system receives the data representing the solution to the optimization task, the system can add the portfolio optimization determined by the quantum computing resource to the displayed archive.

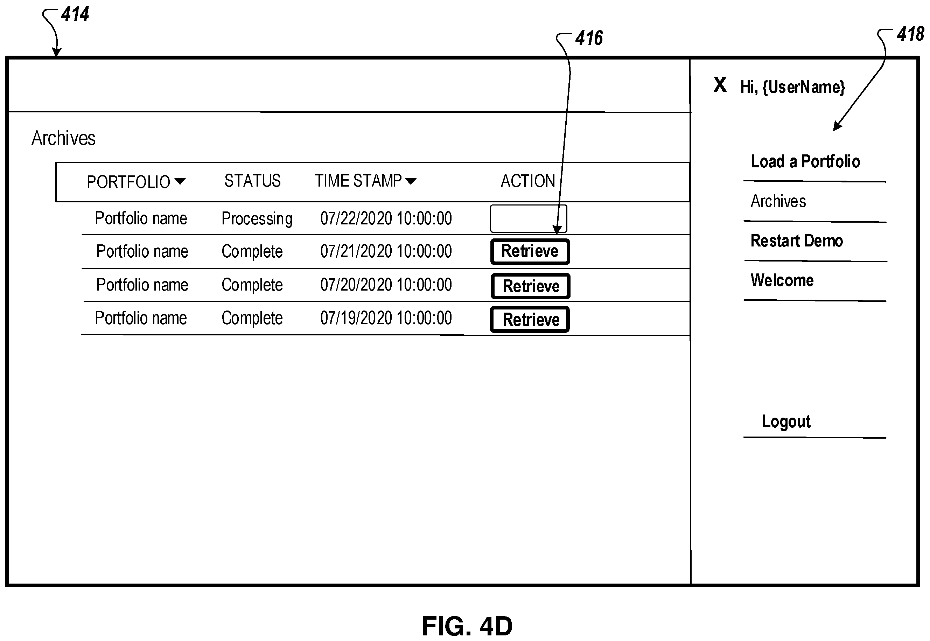

Each existing portfolio optimization is associated with a respective user-selectable retrieve option that, when selected, causes a summary of the existing portfolio optimization to be displayed in the third user interface presentation. An example third user interface presentation is shown in FIG. 4D.

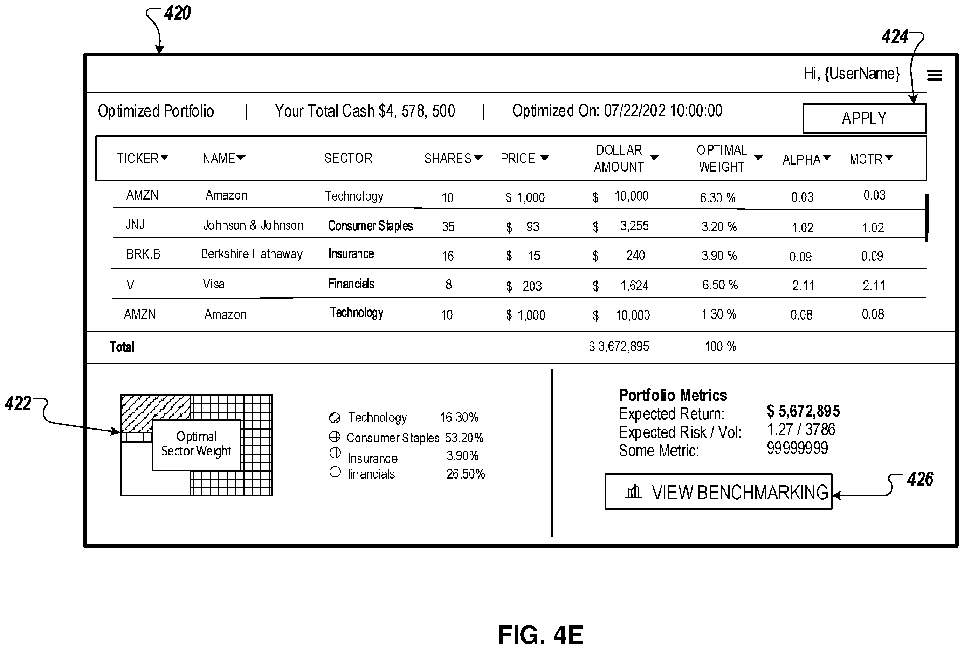

In response to receiving, through the third user interface presentation, user selection of a retrieve option associated with a respective portfolio optimization, the system can display a fourth user interface presentation. The fourth user interface presentation includes a display of a summary of the respective portfolio optimization. The summary includes a list of assets included in the respective portfolio optimization, the list of assets including an optimized asset weight (as determined by the quantum computing resource.) The fourth user interface presentation can also include a graphical representation of a asset sector weighting in the respective portfolio optimization, metrics associated with the respective portfolio optimization, comprising expected return and expected risk, a user selectable apply option, and a user selectable view benchmarking option. An example fourth user interface presentation is shown in FIG. 4E.

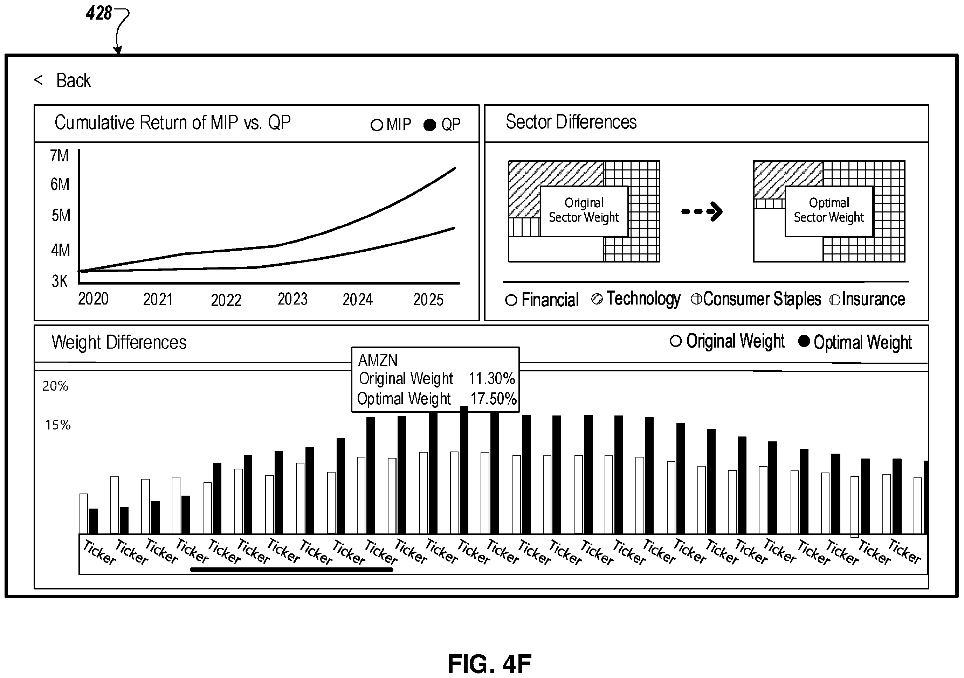

In response to receiving, through the fourth user interface presentation, user selection of the view benchmarking option, the system displays a fifth user interface presentation. The fifth user interface presentation includes a display of: a graphical representation of a cumulative return of a classical computing resource solution versus the quantum computing resource solution, a graphical representation of sector weightings calculated using a classical computing resource and sector weightings calculated using the quantum computing resource, and a graphical representation of weight differences calculated using a classical computing resource and weight differences calculated using the quantum computing resource. An example fifth user interface presentation is shown in FIG. 4F.

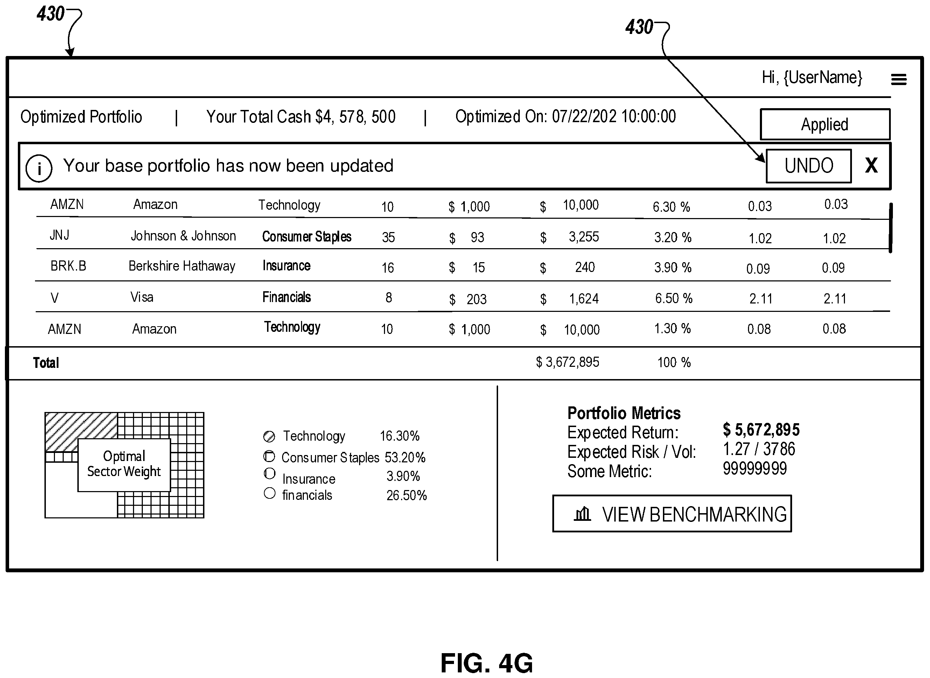

In response to receiving, through the fourth user interface presentation, user selection of the apply option, the system implements a rebalancing of the portfolio by setting the optimal asset sector weighting given the respective portfolio optimization as a base weighting and adjusting current portfolio holdings according to the base weighting. In some implementations the system can further display a user selectable undo option for undoing the setting of the base weighting. An example fourth user interface presentation after selection of the apply option is shown in FIG. 4G.

*Example user interface presentations*

FIGS. 4A 4E show example graphical user interface presentations.

FIG. 4A shows an example first user interface presentation 400. As described above with reference to FIG. 3, the first user interface presentation includes a display of a summary of a current portfolio. The displayed summary includes a total cash balance and a list of assets included in the current portfolio, where the list of assets includes, for each asset, i) an associated ticker, ii) asset name, iii) asset sector, iv) number of shares, v) price per share, vi) total dollar amount per associated ticker, and vii) asset weight. The first user interface presentation further includes a user-selectable optimize portfolio option 402. In response to a user selecting the optimize portfolio option 402, a portfolio optimization process is initiated and a pop up window is displayed, as shown in FIGS. 4B and 4C. The pop up window enables a user to select either a custom optimization strategy or a cluster by sector optimization strategy.

FIG. 4B shows an example pop up window 404 that is displayed in the first user interface presentation 400 in response to the user selecting the optimize portfolio option 402 and in response to the user selecting a custom optimization strategy option 406. The custom optimization strategy allows the user to manipulate the level of discretization as well as select the size of the investable universe from the available S&P 500 stocks. The user can also specify what type of stocks to include in the optimization.

FIG. 4C shows an example pop up window 408 that is displayed in the first user interface presentation 400 in response to the user selecting the optimize portfolio option 402 and in response to the user selecting a cluster by sector optimization strategy option 410. The cluster by sector optimization strategy allows the user to specify the level of discretization. Because the cluster by sector optimization strategy can take a longer time for the quantum computer to process, the pop up window 408 also displays a warning to this effect. The pop up window 408 further displays details about how the current portfolio weights are spread across the 11 sectors for the S&P 500.

In either pop up window 404 or 408, once an optimization strategy is selected, the user can select the run optimization option 412. While the optimization is queued or running, the user can be directed to the user interface presentation 414 shown in FIG. 4D. The example user interface presentation 414 displays an archive of existing optimized portfolios. The existing optimized portfolios can be retrieved and applied through selection of the retrieve options, e.g., option 416. The navigation menu 418 allows the user to load another portfolio, restart the demo, or go back to the welcome page to launch the demo storyline.

In response to receiving, user selection of a retrieve option, e.g., retrieve option 416, the user interface presentation 420 shown in FIG. 4E can be displayed. The example user interface presentation 420 displays of a summary of a portfolio optimization corresponding to the selected retrieve option. The summary includes a list of assets included in the respective portfolio optimization, the list of assets including an optimized asset weight. Displayed prices can be live prices pulled directly from a finance API. The user interface presentation 420 includes a graphical representation 422 of a asset sector weighting in the respective portfolio optimization, metrics associated with the respective portfolio optimization, including expected return and expected risk, a user selectable apply option 424, and a user selectable view benchmarking option 426.

FIG. 4F shows an example user interface presentation 428 displayed in response to a user selecting the benchmarking option 426. The user interface presentation 428 shows different metrics comparing the portfolio optimization of a classical computer vs. the quantum formulation. For example, the example user interface presentation 428 details how the cumulative return with the quantum formulation is far greater in the long run. In the shown example the optimal sector weights differ vastly and even individual ticker spreads vary greatly between classical and quantum.

FIG. 4G shows an example user interface presentation 430 displayed in response to a user selecting the apply option 424 in example user interface presentation 420. In response to the user selecting the apply option 424, the system adjusts the portfolio by replacing the weightages of the base portfolio. The user interface presentation 430 provides an option 432 to undo an applied portfolio optimization. The user interface presentation 430 also allows a user to load a new portfolio with other parameters or retrieve an existing portfolio to run again.

*Classical MIP problem formulation*

A modified objective function that is based on tracking error and only one penalty for transaction costs and portfolio turnover is defined as follows.

The first item to be minimized is the tracking of error between the final and target portfolio. This is given by the following equation, where *N* is the number of stocks in the investable universe:

$$\lambda_{\text{cov}} \sum_{j=1}^{N} \sum_{i=1}^{N} (w_f^i - w_t^i) V_{i,j} (w_f^j - w_t^j). \tag{1}$$

Here $w_f^i$ and $w_t^i$ are the weights of security *i* in the final portfolio and target portfolio respectively, and $V_{i,j}$ is the covariance of the return between stock *i* and *j*.

The next objective is to maximize the expected return of the final portfolio. In minimization terms, this becomes:

$$-\lambda_\alpha \sum_{i=1}^{N} \alpha^i \cdot w_f^i, \tag{2}$$

where $\alpha^i$ is the forecasted "alpha", or expected return of each stock.

Another quantity to be minimized are the sector differences between the target and final portfolio. *S* total industry sectors give the following equation:

$$\lambda_{\text{sector}} \sum_{s=1}^{S} \left| \sum_{i=1}^{N} M_s^i (w_f^i - w_t^i) \right|, \tag{3}$$

where $M_s^i$ is an indicator function indicating if security *i* is in sector s. Note that the above can be regarded as the 1-norm of the difference vector of the sectors, and for the purpose of characterizing the sector difference, the 2-norm could also be effective. The squared 2-norm is considered here, as it avoids the overhead needed to deal with absolute-valued constraints:

$$\lambda_{\text{sector}} \sum_{s=1}^{S} \left( \sum_{i=1}^{N} M_s^i (w_f^i - w_t^i) \right)^2, \tag{4}$$

The cost function for reducing the number of names, i.e. the number of invested stocks, in the final portfolio can be written as:

$$\lambda_{\text{names}} \sum_{i=1}^{N} y_{\text{names}}^i. \tag{5}$$

Similarly, the cost function for reducing the number of trades / turnover of the portfolio is given by:

$$\lambda_{\text{trades}} \sum_{i=1}^{N} y_{\text{trades}}^i. \tag{6}$$

Penalties for transaction costs are modeled using a function that captures the price impact of trading. Although transaction cost models are typically non-linear, the presently described model is simplified to a linear function. Despite this simplification the primary variables that influence transaction costs can be reasonably captured. The model is formulated as follows:

$$\lambda_{\text{txc}} \sum_{i=1}^{N} \left( a^i \delta w^i + b^i \sigma_i \frac{\delta w^i}{\sqrt{\nu^i}} \right) = \lambda_{\text{txc}} \sum_{i=1}^{N} \left( a^i + \frac{b^i \sigma_i}{\sqrt{\nu^i}} \right) \delta w^i, \qquad (7)$$

where

- $\delta w^i$ is the absolute value of the turnover in the portfolio, i.e. $\left| w_f^i - w_0^i \right|$, where $w_0^i$ are the weights of security i in the initial (pre-optimized) portfolio.

- $a^i$ is one half the bid ask spread divided by the stock price.

- $b^i$ is a positive constant. In the absence of trade desk data, $b^i$ may be simplified to 1.

- $\sigma^i$ is the daily volatility of the stock.

- $\nu^i$ is the average daily volume of the stock in dollars, i.e. volume times price and divided by the dollar value of the portfolio.

Due to the same reasons discussed above regarding the sector difference, the squared 2-norm can be considered instead of 1-norm:

$$\lambda_{\text{txc}} \sum_{i=1}^{N} \left( a^i + \frac{b^i \sigma_i}{\sqrt{\nu^i}} \right)^2 \left( w_f^i - w_0^i \right)^2, \qquad (8)$$

Combining all of the above objectives results in the following optimization problem, where the cost function that is to be minimized is:

$$\lambda_{\text{cov}} \sum_{j=1}^{N} \sum_{i=1}^{N} (w_f^i - w_t^i) V_{i,j} (w_f^j - w_t^j)$$

$$- \lambda_\alpha \sum_{i=1}^{N} \alpha^i \cdot w_f^i$$

$$+ \lambda_{\text{sector}} \sum_{s=1}^{S} \left( \sum_{i=1}^{N} M_s^i (w_f^i - w_t^i) \right)^2 \qquad (9)$$

$$+ \lambda_{\text{names}} \sum_{i=1}^{N} y_{\text{names}}^i + \lambda_{\text{trades}} \sum_{i=1}^{N} y_{\text{trades}}^i$$

$$+ \lambda_{\text{txc}} \sum_{i=1}^{N} \left( a^i + \frac{b^i \sigma_i}{\sqrt{\nu^i}} \right)^2 \left( w_f^i - w_0^i \right)^2,$$

subject to the following constraints:

$$\sum_{i=1}^{N} w_f^i = 1, \qquad\qquad (10)$$

and for all $i$,

$$
\begin{aligned}
w_f^i &\leq a_{\mathrm{cap}}^i \cdot w_{\mathrm{max}} \cdot y_{\mathrm{names}}^i \\
w_f^i - w_0^i &\leq y_{\mathrm{trades}}^i \\
w_f^i - w_0^i &\geq -y_{\mathrm{trades}}^i \qquad\qquad (11) \\
w_f^i &\in [0, 1] \\
y_{\mathrm{names}}^i &\in \{0, 1\}, y_{\mathrm{trades}}^i \in \{0, 1\}.
\end{aligned}
$$

In the above formulation, limits on individual stock positions are managed by a maximum weight allowance $w_{\mathrm{max}} \in [0, 1]$ scaled by a market capitalization parameter $a_{\mathrm{cap}}^i \in [0, 1]$ for each stock. $w_{\mathrm{max}}$ is the maximum allowed percentage of investment into any single stock, and $a_{\mathrm{cap}}^i$ poses further investment restriction on the individual stock $i$.

In many scenarios, this constraint can be simplified to:

$$w_f^i \leq w_{\mathrm{max}} \cdot y_{\mathrm{names}}^i, \qquad\qquad (12)$$

in which all stocks are restricted by the same investment cap; or more specifically, there is no restriction, and in this case:

$$w_f^i \leq y_{\mathrm{names}}^i. \qquad\qquad (13)$$

*Classical QP Optimization to obtain target portfolio weights*

This section details the formulation used for the first pass optimization in order to derive the variables $w_t^i$, which are the target weights for each asset in the portfolio. In this formulation a 'standard' quantitative formulation based on minimizing risk and transaction costs while maximizing alpha is assumed. It is also assumed that the optimizer will have a set of sector and asset bounds. This model can be solved as a quadratic program, or QP. The model format is detailed below. The following equation is to be minimized:

$$
\begin{aligned}
&\sum_{i=1}^{N} -\alpha^i \cdot w_t^i \\
&+ \lambda_{risk} \sum_{j=1}^{N} \sum_{i=1}^{N} w_t^i \cdot V_{i,j} \cdot w_t^j \qquad\qquad (14) \\
&+ \lambda_{txc} \sum_{i=1}^{N} a^i \delta w^i + b^i \sigma_i \frac{\delta w^i}{\sqrt{\nu^i}}
\end{aligned}
$$

Subject to the following constraints:

$$\sum_{i=1}^{N} w_t^i = 1$$

$$lb_s \leq \sum_{i=1}^{N} M_s^i w_t^i \leq ub_s$$

$$w_t^i \leq a_{cap}^i \cdot w_{max}$$

$$w_t^i - w_o^i \leq \delta w^i \qquad\qquad (15)$$

$$-(w_t^i - w_o^i) \leq \delta w^i$$

$$w_t^i \geq 0, \delta w^i \geq 0$$

The following steps show how to derive $w_t^i$ :

1. Construct Quadratic form for covariance $\lambda_{risk} \sum_{j=1}^{N} \sum_{i=1}^{N} w_t^i \cdot V_{i,j} \cdot w_t^j$

2. Assemble alpha vector : $\sum_{i=1}^{N} -\alpha^i \cdot w_t^i$

3. Transaction cost vector : $\lambda_{txc} \sum_{i=1}^{N} a^i \delta w^i + b^i \sigma_i \frac{\delta w^i}{\sqrt{v^i}}$

4. Constraints: Weight, Sum to 1 constraint : $\sum_{i=1}^{N} w_t^i = 1$

5. Asset bounds : $w_t^i \leq a_{cap}^i \cdot w_{max}$

6. Sector bounds as it's the first pass QP : $lb_s \leq \sum_{i=1}^{N} M_s^i w_t^i \leq ub_s$

*Preprocessing of Other Problem Parameters*

This section details how to derive $\alpha^i$, $a^i$, $\sigma_i$, $v^i$ and $a_{cap}^i$ .

1. $\alpha^i$: This is the expected return of stock *i*. It is calculated using weekly closing prices (*p(t)*) adjusted to account for dividends. The formula for weekly returns is $\frac{p(t)}{p(t-1)} - 1$ . Thus, $\alpha^i$ is the mean of the weekly returns.

2. $a^i$: The normalized daily bid ask spread is given by $\frac{ask(t)-bid(t)}{p(t)}$ where *p(t)* is the daily closing price. Thus $a^i$ is one half of this figure: $\frac{1}{2}\left(\frac{ask(t)-bid(t)}{p(t)}\right)$

3. $\sigma_i$: This is the daily volatility of the stock, calculated by taking the standard deviation of the daily returns.

4. $v^i$: This is the average daily volume of the stock in dollars, calculated by finding the average of the products of the daily volumes and daily prices and dividing by the current dollar value of the portfolio.

5. $a_{cap}^i$ : This is the normalized log of the current market capitalization, calculated by $\frac{\ln(marketcap^i+1)}{\max_i(\ln(marketcap^i+1))}$

*Problem mapping*

Before converting to a Quadratic Unconstrained Binary Optimization (QUBO) problem, the MIP problem must be converted to a pure integer problem, meaning continuous variables must be converted to integer variables. Then, to convert to QUBO, all variables need to be converted to their binary representations, and the constraints will be incorporated into the objective function as penalty terms.

To map this specific optimization problem, described in Eq. (9-11), to a QUBO problem, the components that need to be addressed are identified and grouped into two steps:

1. The variables $w_f^i$ 's are continuous: As stated above, in a QUBO problem, the variables are only allowed to be discrete, in particular binary. Therefore, a discretization of $w_f^i$ 's is needed. In this step, the discretization and convert-to-binary steps are combined for efficiency.

2. Inequality constraints need to be mapped to their respective equality ones first, which will require a logarithmic (compared to the range the inequality covers) amount of new binary variables. Then, the equality constraints will need to be added as penalty terms to the cost function, i.e. each equality constraint can be added directly as a penalty term by squaring it and multiplying it by a penalty constant.

The following sections describe the methods to implement these steps.

*Discretization: continuous variables to binary variables*

The variables $w_f^i$ 's are continuous in the interval [0,1]. One way to discretize each of these variables is to use $N_D$ binary variables to represent the $2^{N_D}$ evenly spaced values in the interval. In this way, $w_f^i$ will take values in the set $\left\{ \frac{k}{2^{N_D}-1} : k = 0, 1, ..., 2^{N_D} - 1 \right\}$.

To implement this concept, for each $i$, introduce $N_D$ binary variables $W_{i,0}, W_{i,1}, ..., W_{i,N_D-1} \in \{0, 1\}$ that form the binary representation of $w_f^i$, which takes value in the set $\{0, 1, ..., 2^{N_D} - 1\}$. Then, the following equation relating the new and original variables is established:

$$w_f^i = \frac{\sum_{j=0}^{N_D-1} W_{i,j} 2^j}{2^{N_D} - 1}. \qquad (16)$$

As a consequence, all $w_f^i$ 's in Eq. (9-11) can be replaced with the right hand side (RHS) of the equation above. The variables of the problem are now $W_{i,j}$'s instead of $w_f^i$ 's.

In this approximated approach, the larger $N_D$ is chosen, the more resemblance the resulting problem has to the original problem, while the more complicated the resulting problem is due to the increasing number of binary variables.

Equation (16) can be used to determine updated weights for portfolio holdings using values of $W_{i,j}$ obtained from a quantum computing resource.

*Mapping inequality constraints to equality constraints*

To map the inequality constraints seen in Eq. (11) to the respective equality ones, a novel extension of the following method is applied.

Without loss of generality, let $M \in \mathbb{N}_+$ be a positive integer, and assume the existence of an integer variable $y$ with the following constraint:

$$0 \le y \le M. \qquad (17)$$

Let $a_i \in \{0,1\}$, for $i = 0,1,..., \lceil \log_2(M + 1) \rceil - 1$, be binary variables such that:

$$y = \sum_{i=0}^{\lceil \log_2(M+1) \rceil - 1} a_i 2^i, \qquad (18)$$

in which $a_i$'s form the binary representation of $y$. Note that this equality automatically enforces the inequality $0 \le y$.

Now, if $M = 2^k - 1$ for some $k \in \mathbb{N}$, then $y \le M$ also holds. In general, however, $M \ne 2^k - 1$, for any $k \in \mathbb{N}$

, thus $\sum_{i=0}^{\lceil \log_2(M+1) \rceil - 1} a_i 2^i$ can take values $> M$. To restrict the other inequality

$$\sum_{i=0}^{\lceil \log_2(M+1) \rceil - 1} a_i 2^i \le M, \qquad (19)$$

another set of binary slack variables of the same size, $b_i \in \{0,1\}$, for $i = 0,1, ..., [\log_2(M + 1)] - 1$, is introduced and the below equality constraint is enforced:

$$\sum_{i=0}^{\lceil \log_2(M+1) \rceil - 1} a_i 2^i + \sum_{i=0}^{\lceil \log_2(M+1) \rceil - 1} b_i 2^i = M. \qquad (20)$$

It can be seen that, since $0 \le \sum_{i=0}^{\lceil \log_2(M+1) \rceil - 1} b_i 2^i \le 2^{\lceil \log_2(M+1) \rceil} - 1$,

$$\sum_{i=0}^{\lceil \log_2(M+1) \rceil - 1} a_i 2^i = M - \sum_{i=0}^{\lceil \log_2(M+1) \rceil - 1} b_i 2^i \le M, \qquad (21)$$

and

$$\sum_{i=0}^{\lceil \log_2(M+1) \rceil - 1} a_i 2^i = M - \sum_{i=0}^{\lceil \log_2(M+1) \rceil - 1} b_i 2^i \ge M - \left(2^{\lceil \log_2(M+1) \rceil} - 1\right), \qquad (22)$$

in which $M$-($2^{\lceil \log_2(M+1) \rceil}$-1) $\le$ 0. Hence, by introducing the binary variables $a_i$'s and $b_i$'s, the inequality constraint in Eq.(17) is satisfied:

$$0 \le y = \sum_{i=0}^{\lceil \log_2(M+1) \rceil - 1} a_i 2^i \le M. \qquad (23)$$

To summarize, the variables $a_i$'s take care of the $\ge 0$ inequality, and the variables $b_i$'s take care of the $\le M$ inequality; if $M = 2^k - 1$ for some $k \in \mathbb{N}$, $b_i$'s do not need to be introduced.

The method described above can also be applied to the inequality constraints.

*The constraint* $w_f^i \le a_{cap}^i \cdot w_{max} \cdot y_{names}^i$

First consider in Eq. (11), for each $i \in \{1, ..., N\}$, the inequality constraint

$$w_f^i \leq a_{\mathrm{cap}}^i \cdot w_{\max} \cdot y_{\mathrm{names}}^i. \qquad (24)$$

Assuming that discretization was performed as described above, the above inequality is now:

$$\frac{\sum_{j=0}^{N_D-1} W_{i,j} 2^j}{2^{N_D} - 1} \leq a_{\mathrm{cap}}^i \cdot w_{\max} \cdot y_{\mathrm{names}}^i, \qquad (25)$$

or, equivalently:

$$\sum_{j=0}^{N_D-1} W_{i,j} 2^j - a_{\mathrm{cap}}^i \cdot w_{\max} \cdot y_{\mathrm{names}}^i \left(2^{N_D} - 1\right) \leq 0. \qquad (26)$$

The left hand side (LHS) of the above inequality is the variable term, and it could possibly be non-integer due to $a_{\mathrm{cap}}^i \cdot w_{\max}\left(2_D^N - 1\right)$ being non-integer. If the method mentioned in the beginning of the section is to be used, the LHS must be integer-valued.

As described above, oftentimes $a_{\mathrm{cap}}^i \cdot w_{\max} = 1$ is set for all $i$. In this case, the LHS is integer-valued, and since $W_{i,j}$'s and $y_{\mathrm{names}}^i$ are binary variables taking values in $\{0,1\}$, the LHS is $\geq - (2^{N_D} - 1)$.

Therefore, the inequality becomes:

$$- \left(2^{N_D} - 1\right) \leq \sum_{j=0}^{N_D-1} W_{i,j} 2^j - y_{\mathrm{names}}^i \left(2^{N_D} - 1\right) \leq 0, \qquad (27)$$

or, equivalently:

$$0 \leq - \sum_{j=0}^{N_D-1} W_{i,j} 2^j + y_{\mathrm{names}}^i \left(2^{N_D} - 1\right) \leq \left(2^{N_D} - 1\right). \qquad (28)$$

Notice that the above inequality is in the standard form $0 \leq y \leq M$, where $M$ is an integer and $y$ is integer-valued variable, and therefore the method can be applied. In this case, since the second inequality in always satisfied as discussed above, one set of $N_D$ binary variables needs to be introduced

$$b_{i,0}^{(1)}, b_{i,1}^{(1)}, ..., b_{i,N_D-1}^{(1)} \in \{0,1\}, \qquad (29)$$

and the inequality can be replaced with the following equality:

$$- \sum_{j=0}^{N_D-1} W_{i,j} 2^j + y_{\mathrm{names}}^i \left(2^{N_D} - 1\right) = \sum_{k=0}^{N_D-1} b_{i,k}^{(1)} 2^k, \qquad (30)$$

or, equivalently,

$$\sum_{j=0}^{N_D-1} W_{i,j} 2^j - y_{\mathrm{names}}^i \left(2^{N_D} - 1\right) + \sum_{k=0}^{N_D-1} b_{i,k}^{(1)} 2^k = 0. \qquad (31)$$

In the general case in which $a_{\mathrm{cap}}^i \cdot w_{\max}$ is not set to 1, and especially that $a_{\mathrm{cap}}^i \cdot w_{\max}\left(2^{N_D}-1\right) \notin \mathbb{N}$, a restriction on $a_{\mathrm{cap}}^i$ and $w_{\max}$ can be imposed such that $a_{\mathrm{cap}}^i \cdot w_{\max}\left(2^{N_D}-1\right) \in \mathbb{Q}$ is a rational number. In this situation, imposing such a restriction does not significantly reduce the accuracy of the calculation as rational numbers are dense, and a rational number arbitrarily close to any real number can always be found. However, the magnitude of the denominator will affect the overhead introduced; and thus, $a_{\mathrm{cap}}^i \cdot w_{\max}\left(2^{N_D}-1\right)$ with small magnitude of denominator is desired.

Now, given *i*, let

$$a_{\mathrm{cap}}^i \cdot w_{\max}\left(2^{N_D} - 1\right) = \frac{p_i}{q_i}, \qquad (32)$$

where, $p_i$, $q_i \in \mathbb{N}_+$ are positive integers. The inequality then becomes

$$\sum_{j=0}^{N_D-1} W_{i,j} 2^j - \frac{p_i}{q_i} \cdot y_{\mathrm{names}}^i \leq 0, \qquad (33)$$

or, equivalently

$$q_i \sum_{j=0}^{N_D-1} W_{i,j} 2^j - p_i \cdot y_{\mathrm{names}}^i \leq 0. \qquad (34)$$

The LHS is now integer-valued, and since $W_{i,j}$'s and $y_{\mathrm{names}}^i$ are binary variables taking values in {0,1}, the LHS is $\geq$ -$p_i$.

Therefore, the inequality becomes:

$$-p_i \leq q_i \sum_{j=0}^{N_D-1} W_{i,j} 2^j - p_i \cdot y_{\mathrm{names}}^i \leq 0, \qquad (35)$$

or, equivalently:

$$0 \leq -q_i \sum_{j=0}^{N_D-1} W_{i,j} 2^j + p_i \cdot y_{\mathrm{names}}^i \leq p_i. \qquad (36)$$

The above inequality is in the standard form $0 \leq y \leq M$, where *M* is an integer and *y* is an integer-valued variable, and therefore the previously described method may be applied.

Let

$$M_i^{(1)} = \lceil \log_2 (p_i + 1) \rceil . \qquad (37)$$

Since the second inequality is always satisfied, a set of $M_i^{(1)}$ binary variables is introduced to handle the first inequality:

$$b_{i,0}^{(1)}, b_{i,1}^{(1)}, ..., b_{i,M_i^{(1)}-1}^{(1)} \in \{0, 1\}, \qquad (38)$$

and the inequality is replaced with the following equality:

$$-q_i \sum_{j=0}^{N_D-1} W_{i,j} 2^j + p_i \cdot y_{\text{names}}^i = \sum_{k=0}^{M_i^{(1)}-1} b_{i,k}^{(1)} 2^k, \qquad (39)$$

or, equivalently:

$$q_i \sum_{j=0}^{N_D-1} W_{i,j} 2^j - p_i \cdot y_{\text{names}}^i + \sum_{k=0}^{M_i^{(1)}-1} b_{i,k}^{(1)} 2^k = 0. \qquad (40)$$

_The constraint_ $w_f^i - w_0^i \le y_{trades}^i$

For a given *i*, consider the constraint

$$w_f^i - w_0^i \le y_{\text{trades}}^i. \qquad (41)$$

Due to the discretization, this can be re-written as:

$$\frac{\sum_{j=0}^{N_D-1} W_{i,j} 2^j}{2^{N_D} - 1} - w_0^i \le y_{\text{trades}}^i, \qquad (42)$$

or,

$$\sum_{j=0}^{N_D-1} W_{i,j} 2^j - \left(2^{N_D} - 1\right) y_{trades}^i \le \left(2^{N_D} - 1\right) w_0^i. \qquad (43)$$

It can be observed from the above that, since $W_{i,j}$'s and $y_{\text{trades}}^i$ are binary variables taking values in {0,1}, the LHS is integer-valued and is $\ge$ - ($2^{N_D}$ - 1). Therefore, the above inequality becomes

$$-\left(2^{N_D} - 1\right) \le \sum_{j=0}^{N_D-1} W_{i,j} 2^j - \left(2^{N_D} - 1\right) y_{\text{trades}}^i \le \left\lfloor \left(2^{N_D} - 1\right) w_0^i \right\rfloor . \qquad (44)$$

A floor operator was added to the RHS, which is valid due to the variable being integer-valued. The above is equivalent to

$$0 \leq \sum_{j=0}^{N_D-1} W_{i,j} 2^j + \left(2^{N_D} - 1\right)\left(1 - y_{\text{trades}}^i\right) \leq \left\lfloor \left(2^{N_D} - 1\right) w_0^i \right\rfloor + \left(2^{N_D} - 1\right),$$

$$(45)$$

which is in the desired standard form. For convenience define

$$M_i^{(2)} \equiv \left\lceil \log_2 \left( \left\lfloor \left(2^{N_D} - 1\right) w_0^i \right\rfloor + \left(2^{N_D} - 1\right) + 1 \right) \right\rceil.$$

$$(46)$$

Since the first inequality in the above is always satisfied, a set of $M_i^{(2)}$ binary variables is introduced to handle the second inequality:

$$b_{i,0}^{(2)}, b_{i,1}^{(2)}, ..., b_{i,M_i^{(2)}-1}^{(2)} \in \{0, 1\},$$

$$(47)$$

and the above inequality is replaced with the following equality:

$$\sum_{j=0}^{N_D-1} W_{i,j} 2^j + \left(2^{N_D} - 1\right)\left(1 - y_{\text{trades}}^i\right) + \sum_{k=0}^{M_i^{(2)}-1} b_{i,k}^{(2)} 2^k = \left\lfloor \left(2^{N_D} - 1\right) w_0^i \right\rfloor + \left(2^{N_D} - 1\right),$$

$$(48)$$

or, equivalently,

$$\sum_{j=0}^{N_D-1} W_{i,j} 2^j - \left(2^{N_D} - 1\right) y_{\text{trades}}^i + \sum_{k=0}^{M_i^{(2)}-1} b_{i,k}^{(2)} 2^k = \left\lfloor \left(2^{N_D} - 1\right) w_0^i \right\rfloor,$$

$$(49)$$

*The constraint* $w_f^i - w_0^i \geq -y_{trades}^i$

Consider the last set of inequalities, in which for a given *i*,

$$w_f^i - w_0^i \geq -y_{\text{trades}}^i.$$

$$(50)$$

Due to the discretization, the above can be rewritten as:

$$\frac{\sum_{j=0}^{N_D-1} W_{i,j} 2^j}{2^{N_D} - 1} - w_0^i \geq -y_{\text{trades}}^i,$$

$$(51)$$

or, equivalently:

$$\left(2^{N_D} - 1\right) w_0^i \le \sum_{j=0}^{N_D-1} W_{i,j} 2^j + \left(2^{N_D} - 1\right) y_{\text{trades}}^i. \tag{52}$$

Observe from the above that, since $W_{i,j}$'s and $y_{\text{trades}}^i$ are binary variables taking values in {0,1}, the RHS is integer and is $\le 2^{N_D}$ - 1 + ($2^{N_D}$ - 1) = 2 ($2^{N_D}$ - 1). This results in the following inequality:

$$\left\lceil \left(2^{N_D} - 1\right) w_0^i \right\rceil \le \sum_{j=0}^{N_D-1} W_{i,j} 2^j + \left(2^{N_D} - 1\right) y_{\text{trades}}^i \le 2 \left(2^{N_D} - 1\right). \tag{53}$$

The ceiling operator on the LHS is valid due to the variable term being integer-valued. The above is equivalent to

$$\begin{aligned} 0 \le \sum_{j=0}^{N_D-1} W_{i,j} 2^j + \left(2^{N_D} - 1\right) y_{\text{trades}}^i - \left\lceil \left(2^{N_D} - 1\right) w_0^i \right\rceil \\ \le 2 \left(2^{N_D} - 1\right) - \left\lceil \left(2^{N_D} - 1\right) w_0^i \right\rceil. \end{aligned} \tag{54}$$

For convenience define

$$M_i^{(3)} \equiv \left\lceil \log_2 \left( 2 \left(2^{N_D} - 1\right) - \left\lceil \left(2^{N_D} - 1\right) w_0^i \right\rceil + 1 \right) \right\rceil. \tag{55}$$

Since the second inequality is always satisfied, a set of $M_i^{(3)}$ binary variables is introduced to handle the first inequality:

$$b_{i,0}^{(3)}, b_{i,1}^{(3)}, ..., b_{i,M_i^{(3)}-1}^{(3)} \in \{0, 1\}, \tag{56}$$

and the above inequality is replaced with the following equality:

$$\sum_{j=0}^{N_D-1} W_{i,j} 2^j + \left(2^{N_D} - 1\right) y_{\text{trades}}^i - \left\lceil \left(2^{N_D} - 1\right) w_0^i \right\rceil = \sum_{k=0}^{M_i^{(3)}-1} b_{i,k}^{(3)} 2^k. \tag{57}$$

*Adding equality constraints as penalty terms to the cost function*

Each equality constraint can be added directly to the cost function as a penalty term. This is described in a general manner below.

Without loss of generality, an equality constraint involving a vector of multiple variables y = $(y_0, y_1, ..., y_n)$ is assumed:

$$f(\mathbf{y}) = 0, \tag{58}$$

that is, everything is moved to the left hand side. Then, let the penalty term that is to be added be

$$P f(\mathbf{y})^2, \tag{59}$$

where $P \gg 0$ is a large positive constant. This penalty above ensures that when $f(y) \neq 0$, a large penalty constant will be added to the cost function.

This method described above may then be applied to the equality constraints.

Continuing with the equalities derived above, the following set of penalty terms can be added to the cost function:

$$P_i^{(1)} \left( q_i \sum_{j=0}^{N_D-1} W_{i,j} 2^j - p_i \cdot y_{\text{names}}^i + \sum_{k=0}^{M_i^{(1)}-1} b_{i,k}^{(1)} 2^k \right)^2, \qquad (60)$$

for all $i = 1,..,N$, in which $P_i^{(1)} \gg 0$, and $p_i$ and $q_i$ are such that $\frac{p_i}{q_i} = a_{\text{cap}}^i \cdot w_{\max} \left( 2^{N_D} - 1 \right)$; and the terms

$$P_i^{(2)} \left( \sum_{j=0}^{N_D-1} W_{i,j} 2^j - \left( 2^{N_D} - 1 \right) y_{\text{trades}}^i + \sum_{k=0}^{M_i^{(2)}-1} b_{i,k}^{(2)} 2^k - \left\lfloor \left( 2^{N_D} - 1 \right) w_0^i \right\rfloor \right)^2, \qquad (61)$$

$$P_i^{(3)} \left( \sum_{j=0}^{N_D-1} W_{i,j} 2^j + \left( 2^{N_D} - 1 \right) y_{\text{trades}}^i - \left\lceil \left( 2^{N_D} - 1 \right) w_0^i \right\rceil - \sum_{k=0}^{M_i^{(3)}-1} b_{i,k}^{(3)} 2^k \right)^2, \qquad (62)$$

where $P_i^{(2)}$, $P_i^{(3)} \gg 0$, for all $i = 1,...,N$.

*QUBO formulation*

Adding all the equality constraints as penalty terms, a QUBO formulation may be given by the following:

- $w_0^i$ This is the original invested weight of stock $i$. In some implementations this can be user specified or determined by the system, e.g., randomly selected.

- $w_f^i$ These are the continuous variables of the portfolio investment in stock $i$ that are to be optimized. In the presently described formulation, these are discretized into the binary variables $W_{1,j}$'s. Upon solving the QUBO problem and obtaining $W_{1,j}$'s, $w_f^i$ 's are reconstructed using the $W_{1,j}$'s.

- $w_t^i$ This is the result of the classical optimization target weight of stock $i$ that is run prior to solving the QUBO problem on the quantum computer.

- $M_s^i$ This is the fixed indicator used to indicate whether the stock $i$ belongs to sector $s$. It is 1 if stock $i$ belongs to sector $s$, and 0 elsewhere.

- $V_{i,j}$ This is the covariance of the return between stocks $i$ and $j$.

- $\alpha^i$ This is the expected return of stock $i$.

- $\alpha^i$ is one half of the bid ask spread divided by the stock price, of stock $i$.

- $b^i$ is a positive constant, used as a trade-off between expected return and the variance of stock $i$. In the absence of

trade desk data, $b^i$ may be simplified to 1.

- $\sigma^i$ is the daily volatility of stock $i$.

- $v^i$ is the average daily volume of stock $i$ in dollars, i.e. *volume · price* divided by the dollar value of the portfolio.

- $W_{i,j}$ These are the binary variables from the discretization, in which they are used as the binary representation of the original continuous variables.

- $y^i_{\text{names}}$ These are binary, taking values in the set {0,1}. For a given $i$, this is 0 if invested weight of the stock is 0, and this is 1 if the weight is anything but zero, which means it's in the portfolio. The goal is to encourage a small portfolio.

- $y^i_{\text{trades}}$ These are binary, taking values in the set {0,1}. For a given $i$, this is 1 if and only if there is a change in investment to stock $i$: and it is 0 otherwise. The goal is to discourage changes in investment compared to the initial portfolio.

- $b^{(1)}_{i,k}$, $b^{(2)}_{i,k}$, $b^{(3)}_{i,k}$ These are the binary slack variables that were added due to the mapping of inequality constraints to equality constraints.

The QUBO problem is the minimization of the quadratic unconstrained cost function:

$$
\lambda_{\text{cov}} \sum_{i=1}^{N} \sum_{j=1}^{N} \left( \frac{\sum_{k=0}^{N_D-1} W_{i,k} 2^k}{2^{N_D}-1} - w_t^i \right) V_{i,j} \left( \frac{\sum_{l=0}^{N_D-1} W_{j,l} 2^l}{2^{N_D}-1} - w_t^j \right)
$$

$$
- \lambda_\alpha \sum_{i=1}^{N} \alpha^i \cdot \frac{\sum_{k=0}^{N_D-1} W_{i,k} 2^k}{2^{N_D}-1} + \lambda_{\text{sector}} \sum_{s=1}^{S} \left( \sum_{i=1}^{N} M_s^i \left( \frac{\sum_{k=0}^{N_D-1} W_{i,k} 2^k}{2^{N_D}-1} - w_t^i \right) \right)^2
$$

$$
+ \lambda_{\text{names}} \sum_{i=1}^{N} y^i_{\text{names}} + \lambda_{\text{trades}} \sum_{i=1}^{N} y^i_{\text{trades}} + \lambda_{\text{txc}} \sum_{i=1}^{N} \left( a^i + \frac{b^i \sigma_i}{\sqrt{\nu^i}} \right)^2 \left( \frac{\sum_{k=0}^{N_D-1} W_{i,k} 2^k}{2^{N_D}-1} - w_0^i \right)^2
$$

$$
+ P^{(0)} \left( \sum_{i=1}^{N} \sum_{k=0}^{N_D-1} W_{i,k} 2^k - \left( 2^{N_D} - 1 \right) \right)^2
$$

$$
+ \sum_{i=1}^{N} P_i^{(1)} \left( q_i \sum_{j=0}^{N_D-1} W_{i,j} 2^j - p_i \cdot y^i_{\text{names}} + \sum_{k=0}^{M_i^{(1)}-1} b^{(1)}_{i,k} 2^k \right)^2
$$

$$
+ \sum_{i=1}^{N} P_i^{(2)} \left( \sum_{j=0}^{N_D-1} W_{i,j} 2^j - \left( 2^{N_D} - 1 \right) y^i_{\text{trades}} + \sum_{k=0}^{M_i^{(2)}-1} b^{(2)}_{i,k} 2^k - \left\lfloor \left( 2^{N_D} - 1 \right) w_0^i \right\rfloor \right)^2
$$

$$
+ \sum_{i=1}^{N} P_i^{(3)} \left( \sum_{j=0}^{N_D-1} W_{i,j} 2^j + \left( 2^{N_D} - 1 \right) y^i_{\text{trades}} - \sum_{k=0}^{M_i^{(3)}-1} b^{(3)}_{i,k} 2^k - \left\lceil \left( 2^{N_D} - 1 \right) w_0^i \right\rceil \right)^2 ,
$$

$$
(63)
$$

in which $P^{(0)}$, $P_i^{(1)}$, $P_i^{(2)}$, $P_i^{(3)} \gg 0$ for all $i$, and the minimization is subject to the binary variables $W_{i,k}$'s, $y_{\text{names}}^i$'s, $y_{\text{trades}}^i$'s, $b_{i,k}^{(1)}$'s, $b_{i,k}^{(2)}$'s, $b_{i,k}^{(3)}$'s.

Implementations of the digital and/or quantum subject matter and the digital functional operations and quantum operations described in this specification can be implemented in digital electronic circuitry, suitable quantum circuitry or, more generally, quantum computational systems, in tangibly-embodied digital and/or quantum computer software or firmware, in digital and/or quantum computer hardware, including the structures disclosed in this specification and their structural equivalents, or in combinations of one or more of them. The term quantum computing device can include, but is not limited to, quantum computers, quantum information processing systems, quantum cryptography systems, or quantum simulators.

Implementations of the digital and/or quantum subject matter described in this specification can be implemented as one or more digital and/or quantum computer programs, i.e., one or more modules of digital and/or quantum computer program instructions encoded on a tangible non-transitory storage medium for execution by, or to control the operation of, data processing apparatus. The digital and/or quantum computer storage medium can be a machine-readable storage device, a machine-readable storage substrate, a random or serial access memory device, one or more qubits, or a combination of one or more of them. Alternatively or in addition, the program instructions can be encoded on an artificially-generated propagated signal that is capable of encoding digital and/or quantum information, e.g., a machine-generated electrical, optical, or electromagnetic signal, that is generated to encode digital and/or quantum information for transmission to suitable receiver apparatus for execution by a data processing apparatus.

The terms quantum information and quantum data refer to information or data that is carried by, held or stored in quantum systems, where the smallest non-trivial system is a qubit, i.e., a system that defines the unit of quantum information. It is understood that the term qubit encompasses all quantum systems that can be suitably approximated as a two-level system in the corresponding context. Such quantum systems can include multi-level systems, e.g., with two or more levels. By way of example, such systems can include atoms, electrons, photons, ions or superconducting qubits. In many implementations the computational basis states are identified with the ground and first excited states, however it is understood that other setups where the computational states are identified with higher level excited states are possible. The term data processing apparatus refers to digital and/or quantum data processing hardware and encompasses all kinds of apparatus, devices, and machines for processing digital and/or quantum data, including by way of example a programmable digital processor, a programmable quantum processor, a digital computer, a quantum computer, multiple digital and quantum processors or computers, and combinations thereof. The apparatus can also be, or further include, special purpose logic circuitry, e.g., an FPGA (field programmable gate array), an ASIC (application-specific integrated circuit), or a quantum simulator, i.e., a quantum data processing apparatus that is designed to simulate or produce information about a specific quantum system. In particular, a quantum simulator is a special purpose quantum computer that does not have the capability to perform universal quantum computation. The apparatus can optionally include, in addition to hardware, code that creates an execution environment for digital and/or quantum computer programs, e.g., code that constitutes processor firmware, a protocol stack, a database management system, an operating system, or a combination of one or more of them.

A digital computer program, which can also be referred to or described as a program, software, a software application, a module, a software module, a script, or code, can be written in any form of programming language, including compiled or interpreted languages, or declarative or procedural languages, and it can be deployed in any form, including as a stand-alone program or as a module, component, subroutine, or other unit suitable for use in a digital computing environment. A quantum computer program, which can also be referred to or described as a program, software, a software application, a module, a software module, a script, or code, can be written in any form of programming language, including compiled or interpreted languages, or declarative or procedural languages, and translated into a suitable quantum programming language, or can be written in a quantum programming language, e.g., QCL or Quipper.

A digital and/or quantum computer program can, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A digital and/or quantum computer program can be deployed to be executed on one digital or one quantum computer or on multiple digital and/or quantum computers that are located at one site or distributed across multiple sites and interconnected by a digital and/or quantum data communication network. A quantum data communication network is understood to be a network that can transmit quantum data using quantum systems, e.g. qubits. Generally, a digital data communication network cannot transmit quantum data, however a quantum data communication network can transmit both quantum data and digital data.

The processes and logic flows described in this specification can be performed by one or more programmable digital and/or quantum computers, operating with one or more digital and/or quantum processors, as appropriate, executing one or more digital and/or quantum computer programs to perform functions by operating on input digital and quantum data and generating output. The processes and logic flows can also be performed by, and apparatus can also be implemented as, special purpose logic circuitry, e.g., an FPGA or an ASIC, or a quantum simulator, or by a combination of special purpose logic circuitry or quantum simulators and one or more programmed digital and/or quantum computers.

For a system of one or more digital and/or quantum computers to be configured to perform particular operations or actions means that the system has installed on it software, firmware, hardware, or a combination of them that in operation cause the system to perform the operations or actions. For one or more digital and/or quantum computer programs to be configured to perform particular operations or actions means that the one or more programs include instructions that, when executed by digital and/or quantum data processing apparatus, cause the apparatus to perform the operations or actions. A quantum computer can receive instructions from a digital computer that, when executed by the quantum computing apparatus, cause the apparatus to perform the operations or actions.

Digital and/or quantum computers suitable for the execution of a digital and/or quantum computer program can be based on general or special purpose digital and/or quantum processors or both, or any other kind of central digital and/or quantum processing unit. Generally, a central digital and/or quantum processing unit will receive instructions and digital and/or quantum data from a read-only memory, a random access memory, or quantum systems suitable for transmitting quantum data, e.g. photons, or combinations thereof.

The essential elements of a digital and/or quantum computer are a central processing unit for performing or executing instructions and one or more memory devices for storing instructions and digital and/or quantum data. The central processing unit and the memory can be supplemented by, or incorporated in, special purpose logic circuitry or quantum simulators. Generally, a digital and/or quantum computer will also include, or be operatively coupled to receive digital and/or quantum data from or transfer digital and/or quantum data to, or both, one or more mass storage devices for storing digital and/or quantum data, e.g., magnetic, magneto-optical disks, optical disks, or quantum systems suitable for storing quantum information. However, a digital and/or quantum computer need not have such devices.

Digital and/or quantum computer-readable media suitable for storing digital and/or quantum computer program instructions and digital and/or quantum data include all forms of non-volatile digital and/or quantum memory, media and memory devices, including by way of example semiconductor memory devices, e.g., EPROM, EEPROM, and flash memory devices; magnetic disks, e.g., internal hard disks or removable disks; magneto-optical disks; CD-ROM and DVD-ROM disks; and quantum systems, e.g., trapped atoms or electrons. It is understood that quantum memories are devices that can store quantum data for a long time with high fidelity and efficiency, e.g., light-matter interfaces where light is used for transmission and matter for storing and preserving the quantum features of quantum data such as superposition or quantum coherence.

Control of the various systems described in this specification, or portions of them, can be implemented in a digital and/or quantum computer program product that includes instructions that are stored on one or more non-transitory machine-readable storage media, and that are executable on one or more digital and/or quantum processing devices. The systems described in this specification, or portions of them, can each be implemented as an apparatus, method, or system that can include one or more digital and/or quantum processing devices and memory to store executable instructions to perform the operations described in this specification.

While this specification contains many specific implementation details, these should not be construed as limitations on the scope of what may be claimed, but rather as descriptions of features that may be specific to particular implementations. Certain features that are described in this specification in the context of separate implementations can also be implemented in combination in a single implementation. Conversely, various features that are described in the context of a single implementation can also be implemented in multiple implementations separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the implementations described above should not be understood as requiring such separation in all implementations, and it should be understood that the described program components and systems can generally be integrated together in a single software product or packaged into multiple software products.

Particular implementations of the subject matter have been described. Other implementations are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

**Claims**

1. A computer-implemented method comprising:
   receiving data representing a mixed integer programming (MIP) formulation of a portfolio optimization task for a current portfolio;

   mapping the MIP formulation of the portfolio optimization task to a quadratic unconstrained binary optimization (QUBO) formulation of the portfolio optimization task;
   obtaining data representing a solution to the portfolio optimization task from a quantum computing resource, wherein the solution to the portfolio optimization task comprises data indicating how to rebalance the current portfolio; and
   initiating an action based on the obtained data representing a solution to the portfolio optimization task.

2. The method of claim 1, wherein the current portfolio comprises a portfolio output by a quadratic programming optimization process.

3. The method of claim 1 or 2, wherein the MIP formulation of the portfolio optimization task comprises:

   an objective function to be minimized, wherein the objective function comprises continuous-valued variables and is based on i) a tracking error between the current portfolio and a rebalanced portfolio, ii) a penalty for number of invested stocks, iii) a penalty for transaction costs, and iv) a penalty for portfolio turnover; and
   one or more constraints, comprising equality and inequality constraints.

4. The method of claim 3, wherein mapping the MIP formulation of the portfolio optimization task to a QUBO formulation of the portfolio optimization task comprises:

   mapping the objective function to be minimized to a QUBO objective function to be minimized; and
   adding one or more penalty terms to the QUBO objective function to be minimized, wherein the penalty term is determined based on the one or more constraints.

5. The method of claim 4, wherein mapping the MIP formulation of the portfolio optimization task to a QUBO formulation of the portfolio optimization task comprises:

   transforming the continuous-valued variables to discrete-valued variables; and
   converting the discrete-valued variables to binary-valued variables, wherein the binary-valued variables are included in the QUBO objective function.

6. The method of claim 5, wherein transforming the continuous-valued variables to discrete-valued variables and converting the discrete-valued variables to binary-valued variables comprises, for each continuous-valued variable:

   determining a preselected number of binary variables with respective values that form a binary representation of the continuous valued variable; and
   setting the continuous-valued variable as equal to i) an inverse of 2 to the power of the preselected number minus one, multiplied by i) a sum, over an index numbering the binary variables, of the value of a respective binary variable multiplied by 2 to the power of an index label of the respective binary variable.

7. The method of claim 4, 5 or 6 wherein mapping the MIP formulation of the portfolio optimization task to a QUBO formulation of the portfolio optimization task comprises:

   mapping each inequality constraint to a respective equality constraint; and
   adding each equality constraint as a penalty term to the QUBO objective function.

8. The method of claim 7, wherein

   i) the inequality constraints comprise a first inequality constraint that limits investment on stock positions in the rebalanced portfolio, and
   ii) mapping the first inequality constraint to a respective equality
   constraint comprises using rational numbers to approximate one or more real-valued parameters included in the first inequality constraint.

9.  The method of claim 7 or 8, wherein mapping one or more of the inequality constraints to respective equality constraints comprises:

    using a first set of slack variables to determine respective binary representations of one or more integer-valued parameters included in the inequality constraint; and
    using a second set of slack variables to enforce an upper bound of the inequality constraint.

10. The method of claim 7, 8 or 9, wherein adding each equality constraint as penalty terms to the objective function comprises, for each equality constraint, squaring the equality constraint and multiplying the squared equality constraint by a respective penalty constant.

11. The method of any of the preceding claims, wherein

    i) the quantum computing resource comprises a quantum annealing computer, optionally wherein the solution to the portfolio optimization task is computed using quantum adiabatic computation, or
    ii) the quantum computing resource comprises a gate-based universal quantum computer, optionally wherein the solution to the portfolio optimization task is computed using a Quantum Approximate Optimization Approach or other quantum-classical hybrid variational algorithm.

12. The method of any of the preceding claims, wherein initiating an action based on the obtained data representing a solution to the portfolio optimization task comprises adjusting portfolio holdings using the obtained data representing the solution to the portfolio optimization task.

13. A system comprising:

    one or more computers; and
    one or more computer-readable media coupled to the one or more computers having instructions stored thereon which, when executed by the one or more computers, cause the one or more computers to perform operations comprising:

        receiving data representing a mixed integer programming (MIP) formulation of a portfolio optimization task for a current portfolio;
        mapping the MIP formulation of the portfolio optimization task to a quadratic unconstrained binary optimization (QUBO) formulation of the portfolio optimization task;
        obtaining data representing a solution to the portfolio optimization task from a quantum computing resource, wherein the solution to the portfolio optimization task comprises data indicating how to rebalance the current portfolio; and
        initiating an action based on the obtained data representing a solution to the portfolio optimization task.

14. The system of claim 13, wherein the instructions, when executed by the one or more computers, cause the one or more computers to perform operations as defined in one or more of claims 2 to 12.

15. A computer-implemented method comprising:

    displaying a first user interface presentation, wherein the first user interface presentation comprises a display of i) a summary of a current portfolio and ii) a user-selectable optimize portfolio option;
    receiving, through the first user interface presentation, user selection of the optimize portfolio option;
    transmitting data representing a portfolio optimization task associated with optimizing the current portfolio to a quantum computing resource;
    receiving, from the quantum computing resource, data representing a solution to the portfolio optimization task, wherein the solution to the portfolio optimization task comprises an optimized portfolio;
    displaying a second user interface presentation, wherein the second user interface presentation comprises a display of a summary of the optimized portfolio; and
    initiating an action based on the obtained data representing a solution to the portfolio optimization task.

FIG. 1

200

```
┌─────────────────────────────────────────┐
│  Receive data representing MIP formulation of │
│  portfolio optimization task for current portfolio │
│                                      202 │
└─────────────────────────────────────────┘
                     │
                     ▼
┌─────────────────────────────────────────┐
│  Map MIP formulation of portfolio optimization │
│     task to QUBO formulation of portfolio │
│         optimization task            204 │
└─────────────────────────────────────────┘
                     │
                     ▼
┌─────────────────────────────────────────┐
│  Obtain data representing solution to portfolio │
│   optimization task from quantum computing │
│             resource                 206 │
└─────────────────────────────────────────┘
                     │
                     ▼
┌─────────────────────────────────────────┐
│  Adjust portfolio holdings using obtained data │
│  representing solution to portfolio optimization │
│                task                  208 │
└─────────────────────────────────────────┘
```

## FIG. 2

300

```
┌─────────────────────────────────────────────┐
│   Display first user interface presentation,  │
│   where first user interface presentation     │
│   includes a summary of a current portfolio   │
│   and a user selectable optimize              │
│   portfolio option                      302   │
└─────────────────────────────────────────────┘
                      │
                      ▼
┌─────────────────────────────────────────────┐
│   Receive user selection of optimize          │
│   portfolio option                            │
│                                         304   │
└─────────────────────────────────────────────┘
                      │
                      ▼
┌─────────────────────────────────────────────┐
│   Transmit data representing portfolio        │
│   optimization task                           │
│   to quantum computing resource               │
│                                         306   │
└─────────────────────────────────────────────┘
                      │
                      ▼
┌─────────────────────────────────────────────┐
│   Obtain data representing solution to        │
│   portfolio optimization task from quantum    │
│   computing resource                    308   │
└─────────────────────────────────────────────┘
                      │
                      ▼
┌─────────────────────────────────────────────┐
│   Display second user interface presentation, │
│   where second user interface presentation    │
│   includes summary of the optimized portfolio │
│                                         310   │
└─────────────────────────────────────────────┘
```

FIG. 3

**400**

**402**

Hi, {UserName}  ≡

Portfolio Summary          Your Total Cash $4, 578, 500          ⊕  OPTIMIZE

| TICKER ▼ | NAME ▼ | SECTOR | SHARES ▼ | PRICE ▼ | DOLLAR AMOUNT ▼ | WEIGHT ▼ |
|---|---|---|---|---|---|---|
| AMZN | Amazon | Technology | 10 | $ 1,000 | $  10,000 | 5.30 % |
| JNJ | Johnson & Johnson | Consumer Staples | 35 | $  93 | $  3,255 | 2.20 % |
| BRK.B | Berkshire Hathaway | Insurance | 16 | $  15 | $  240 | 3.90 % |
| V | Visa | Financials | 8 | $  203 | $  1,624 | 6.50 % |
| AMZN | Amazon | Technology | 10 | $ 1,000 | $  10,000 | 1.30 % |
| JNJ | Johnson & Johnson | Consumer Staples | 35 | $  93 | $  3,255 | 3.20 % |
| BRK.B | Berkshire Hathaway | Insurance | 16 | $  15 | $  240 | 3.90 % |
| V | Visa | Financials | 8 | $  203 | $  1,624 | 2.50 % |
| BRK.B | Berkshire Hathaway | Insurance | 16 | $  15 | $  240 | 3.90 % |
| V | Visa | Financials | 8 | $  203 | $  1,624 | 6.50 % |
| V | Visa | Financials | 8 | $ 203 | $  1,624 | 6.50 % |

**FIG. 4A**

FIG. 4B

FIG. 4C

EP 3 971 814 A1

## 414

## 416

## 418

EP 3 971 814 A1

Archives

| PORTFOLIO ▼ | STATUS | TIME STAMP ▼ | ACTION |
|---|---|---|---|
| Portfolio name | Processing | 07/22/2020 10:00:00 | |
| Portfolio name | Complete | 07/21/2020 10:00:00 | Retrieve |
| Portfolio name | Complete | 07/20/2020 10:00:00 | Retrieve |
| Portfolio name | Complete | 07/19/2020 10:00:00 | Retrieve |

**X** Hi, {UserName}

**Load a Portfolio**

Archives

**Restart Demo**

**Welcome**

**Logout**

**FIG. 4D**

EP 3 971 814 A1

420

424

Hi, {UserName}   ≡

| Optimized Portfolio | Your Total Cash $4, 578, 500 | Optimized On: 07/22/202 10:00:00 | APPLY |

| TICKER ▼ | NAME ▼ | SECTOR | SHARES ▼ | PRICE ▼ | DOLLAR AMOUNT ▼ | OPTIMAL WEIGHT ▼ | ALPHA ▼ | MCTR ▼ |
|---|---|---|---|---|---|---|---|---|
| AMZN | Amazon | Technology | 10 | $ 1,000 | $ 10,000 | 6.30 % | 0.03 | 0.03 |
| JNJ | Johnson & Johnson | Consumer Staples | 35 | $ 93 | $ 3,255 | 3.20 % | 1.02 | 1.02 |
| BRK.B | Berkshire Hathaway | Insurance | 16 | $ 15 | $ 240 | 3.90 % | 0.09 | 0.09 |
| V | Visa | Financials | 8 | $ 203 | $ 1,624 | 6.50 % | 2.11 | 2.11 |
| AMZN | Amazon | Technology | 10 | $ 1,000 | $ 10,000 | 1.30 % | 0.08 | 0.08 |
| Total | | | | | $ 3,672,895 | 100 % | | |

422

Optimal Sector Weight

⊘ Technology 16.30%
⊕ Consumer Staples 53.20%
⊕ Insurance 3.90%
○ financials 26.50%

**Portfolio Metrics**
Expected Return: **$ 5,672,895**
Expected Risk / Vol: 1.27 / 3786
Some Metric: 99999999

VIEW BENCHMARKING   426

**FIG. 4E**

EP 3 971 814 A1

**428**

< Back

| Cumulative Return of MIP vs. QP | ○ MIP  ● QP |

7M
6M
5M
4M
3K

2020  2021  2022  2023  2024  2025

Sector Differences

Original Sector Weight  ⇢  Optimal Sector Weight

○ Financial  ⊘ Technology  ⊕ Consumer Staples  ◎ Insurance

Weight Differences          ○ Original Weight  ● Optimal Weight

AMZN
Original Weight  11.30%
Optimal Weight  17.50%

20%

15%

Ticker Ticker Ticker Ticker Ticker Ticker Ticker Ticker Ticker Ticker Ticker Ticker Ticker Ticker Ticker Ticker Ticker Ticker Ticker Ticker Ticker Ticker Ticker Ticker Ticker Ticker

**FIG. 4F**

430

430

Hi, {UserName} ≡

Optimized Portfolio | Your Total Cash $4, 578, 500 | Optimized On: 07/22/202 10:00:00 | Applied

ⓘ Your base portfolio has now been updated | UNDO | X

| | | | | | | | | |
|---|---|---|---|---|---|---|---|---|
| AMZN | Amazon | Technology | 10 | $ 1,000 | $ 10,000 | 6.30 % | 0.03 | 0.03 |
| JNJ | Johnson & Johnson | Consumer Staples | 35 | $ 93 | $ 3,255 | 3.20 % | 1.02 | 1.02 |
| BRK.B | Berkshire Hathaway | Insurance | 16 | $ 15 | $ 240 | 3.90 % | 0.09 | 0.09 |
| V | Visa | Financials | 8 | $ 203 | $ 1,624 | 6.50 % | 2.11 | 2.11 |
| AMZN | Amazon | Technology | 10 | $ 1,000 | $ 10,000 | 1.30 % | 0.08 | 0.08 |
| **Total** | | | | | $ 3,672,895 | 100 % | | |

Optimal Sector Weight

⊘ Technology 16.30%
◉ Consumer Staples 53.20%
○ Insurance 3.90%
○ financials 26.50%

**Portfolio Metrics**
Expected Return: **$ 5,672,895**
Expected Risk / Vol: 1.27 / 3786
Some Metric: 99999999

📊 VIEW BENCHMARKING

**FIG. 4G**

# EP 3 971 814 A1

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2017/152289 A1 (1QB INF TECH INC [CA]) 14 September 2017 (2017-09-14) * paragraph [0039] – paragraph [0061] * * figures 1,6 * * claim 2 * | 1-15 | INV. G06Q40/06 |
| X | US 2016/338075 A1 (MCKIBBEN BERNARD [US]) 17 November 2016 (2016-11-17) * paragraph [0008] * | 1-15 | |
| A | YI CHEN ET AL: "A Compressed Coding Scheme for Evolutionary Algorithms in Mixed-Integer Programming: A Case Study on Multi-Objective Constrained Portfolio Optimization", ARXIV.ORG, CORNELL UNIVERSITY LIBRARY, 201 OLIN LIBRARY CORNELL UNIVERSITY ITHACA, NY 14853, 19 September 2019 (2019-09-19), XP081478951, * abstract * | 1-15 | |

**TECHNICAL FIELDS SEARCHED (IPC)**

G06Q

The present search report has been drawn up for all claims

| Place of search | Date of completion of the search | Examiner |
|---|---|---|
| The Hague | 1 February 2022 | Arbutina, Ljiljana |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 19 7000

This annex lists the patent family members relating to the patent documents cited in the above-mentioned European search report.
The members are as contained in the European Patent Office EDP file on
The European Patent Office is in no way liable for these particulars which are merely given for the purpose of information.

01-02-2022

| Patent document cited in search report | Publication date | Patent family member(s) | | Publication date |
|---|---|---|---|---|
| WO 2017152289 A1 | 14-09-2017 | CA | 3017275 A1 | 14-09-2017 |
| | | EP | 3427196 A1 | 16-01-2019 |
| | | JP | 6966177 B2 | 10-11-2021 |
| | | JP | 2019513276 A | 23-05-2019 |
| | | US | 2019019103 A1 | 17-01-2019 |
| | | WO | 2017152289 A1 | 14-09-2017 |
| US 2016338075 A1 | 17-11-2016 | US | 2016338075 A1 | 17-11-2016 |
| | | US | 2019124530 A1 | 25-04-2019 |

EPO FORM P0459

For more details about this annex : see Official Journal of the European Patent Office, No. 12/82

**REFERENCES CITED IN THE DESCRIPTION**

**Patent documents cited in the description**

- US 63079205